# EUROPÄISCHE PATENTSCHRIFT

(11) **EP 1 058 649 B1**
(45) Veröffentlichungstag und Bekanntmachung des Hinweises auf die Patenterteilung: **16.04.2003**
(21) Anmeldenummer: 99907500.5
(22) Anmeldetag: 04.02.1999
(51) Int. Cl.: B65B 33/04, B29C 63/00

(54) **VERFAHREN UND VORRICHTUNG ZUM APPLIZIEREN VON SELBSTHAFTENDER SCHUTZFOLIE AUF KAROSSERIEN**
METHOD AND DEVICE FOR APPLYING A SELF-ADHESIVE PROTECTIVE FILM TO CAR BODIES
PROCEDE ET DISPOSITIF POUR APPLIQUER UN FILM PROTECTEUR AUTO-ADHESIF SUR DES CARROSSERIES

(30) Priorität: 05.03.1998 DE 19809515
(43) Veröffentlichungstag der Anmeldung: 13.12.2000
(73) Patentinhaber: DaimlerChrysler AG, 70567 Stuttgart (DE)
(72) Erfinder: HABISREITINGER, Uwe, D-72250 Freudenstadt (DE); NORDMANN, Bernhard, D-71034 Böblingen (DE)
(86) Internationale Anmeldenummer: EP9900742
(87) Internationale Veröffentlichungsnummer: WO99044891

(56) Entgegenhaltungen:
- DE-U- 29 622 887
- PATENT ABSTRACTS OF JAPAN vol. 018, no. 655 (M-1721), 12. Dezember 1994 -& JP 06 255873 A (NITTO DENKO CORP;OTHERS: 01), 13. September 1994
- PATENT ABSTRACTS OF JAPAN vol. 018, no. 683 (M-1730), 22. Dezember 1994 -& JP 06 271173 A (MAZDA MOTOR CORP), 27. September 1994
- PATENT ABSTRACTS OF JAPAN vol. 018, no. 651 (C-1285), 9. Dezember 1994 -& JP 06 254451 A (HONDA MOTOR CO LTD), 13. September 1994
- PATENT ABSTRACTS OF JAPAN vol. 095, no. 005, 30. Juni 1995 -& JP 07 033311 A (HONDA MOTOR CO LTD), 3. Februar 1995
- PATENT ABSTRACTS OF JAPAN vol. 018, no. 483 (M-1670), 8. September 1994 -& JP 06 156339 A (HONDA MOTOR CO LTD), 3. Juni 1994

## Beschreibung

Die vorliegende Erfindung betrifft ein Verfahren und eine Vorrichtung zum Applizieren von selbsthaftender Schutzfolie auf Karosserien für den Schutz von Fahrzeugen, insbesondere bei deren Transport.

In der Serienfertigung vieler Fahrzeug-Hersteller müssen die Fahrzeuge für den Versand derart präpariert werden, daß sie keinen Schaden nehmen, insbesondere daß die Lackierung durch Transport und Witterungseinflüsse nicht beeinträchtigt wird. Werden für die Kundenüberführung Bahnfahrten oder gar Schiffstransporte nötig, so hat man die Fahrzeuge hierfür mit einer Wachsschutzschicht überzogen, die vor Kundenauslieferung wieder entfernt werden mußte. Das rückstandsfreie Entfernen des Schutzwachses war nicht nur eine personalintensive Arbeit, sondern belastete auch Mensch und Umwelt wegen der dabei eingesetzten Lösungsmittel. Deshalb ist man neuerdings dazu übergegangen, die Karosserien während des Transportes durch selbsthaftende Folien zu schützen, wobei man jedoch lediglich die witterungs- und ablagerungsgefährdeten, im wesentlichen horizontalliegenden Oberflächenpartien der Karosserie so geschützt hat. Weil diese Schutzart nicht nur sehr wirkungsvoll, sondern auch relativ teuer ist, hat man sie nicht nur als Schutz während des Transportes, sondern auch als Schutz während der Fahrzeugmontage vorgesehen und demgemäß die Schutzfolie bereits vor der Endmontage des Fahrzeuges, d.h. unmittelbar nach der Lackierung der Karosserie aufgebracht.

Die Schutzfolie soll möglichst falten- und blasenfrei aufgebracht werden, weil sich unter Falten oder Blasen nach einer gewissen Lagerungszeit ein Mikroklima bilden kann, welches je nach Lacktyp und -farbe u.U. zu sichtbaren Spuren führen kann. Um die Schutzfolien sorgfältig aufbringen zu können, mußten die Folienzuschnitte bisher von vier Personen gehalten, über das Fahrzeug gebracht, ausgerichtet und an die zugehörigen Oberflächenpartien angelegt werden. Trotz des hohen Personalaufwandes ließen sich nicht immer Falten oder Blasen beim Applizieren der Schutzfolie vermeiden. Beim anschließenden Freischneiden der Bereiche für Anbauteile kam es häufig zu Beschädigungen der Lackierung, so daß aufwendige Nacharbeiten erforderlich wurden. Beim bisherigen manuellen Applizieren der Schutzfolie ist man folgendermaßen vorgegangen: Zunächst wurde von mindestens zwei Personen ein größenmäßig auf eine Oberflächenpartie abgestimmtes, rechteckiges Stück einer Schutzfolie von einer Vorratsrolle abgezogen und abgeschnitten, wobei es von insgesamt vier Personen übernommen werden mußte. Dieses Schutzfolienstück wurde von den vier Personen freihändig mit der selbsthaftenden Seite nach unten weisend frei ausgespannt, so über die Karosserie verbracht, dort in Horizontallage auf die zugehörige Oberflächenpartie lagegerecht abgesenkt, daran mehr oder weniger falten- und blasenfrei angelegt und durch Streichen mit einem weichen, gleitfähigen Gegenstand, z.B. einem ausgesteiften Filzstück angedrückt. Im Bereich überklebter Spalte zu angrenzenden Karosserieteilen wie Kotflügel oder Türen wurde die Schutzfolie mit einem Messer manuell durchschnitten und die Schnittränder von Hand angedrückt. Um die Schutzfolie im Bereich von Anbauteilen wie Dachzierstäben, Schiebedachdeckel, Kühleraufsatzfigur, Scheibenwaschdüsen, Antennen, Scheibeneinfassungen o.dgl. freischneiden und montagegerecht aussparen zu können, hat man bei der manuellen Folienapplikation zuvor eine flache streifenförmige Schablone auf die Karosserie lagegerecht aufgelegt und diese mit der zu applizierenden Schutzfolie ebenfalls überklebt, so daß an den freizuschneidenden Bereichen die Folie nicht nur in einem kleinen Abstand zur Karosserieoberfläche gehalten wurde, sondern durch die Schablone auch eine Schneid- und Führungskante für ein Messer gebildet wird, entlang der die Folie konturgerecht getrennt werden kann. Das Arbeiten mit einem scharfkantigen Messer in dichtem Abstand zur lackierten Karosserieoberfläche hat in der Hektik trotz laufender Übung immer wieder zu Lackbeschädigungen und zu aufwendiger Nacharbeit geführt.

Dieser Stand der Technik entspricht der Fertigungspraxis zumindest bei der Anmelderin; nachdem die USA aus Umweltschutzgründen keine Schutzwachsungen im Fahrzeugversand mehr zulassen, sind wahrscheinlich auch andere Fahrzeughersteller zu einem ähnlichen Folienschutzsystem für deren Fahrzeuge während des Versandes übergegangen. Eine druckschriftliche Veröffentlichung darüber ist der Anmelderin jedoch nicht bekannt.

In dem deutschen Gebrauchsmuster DE 296 22 887 ist eine Vorrichtung zum Applizieren von Schutzfolie auf Pkw-Karosserien beschrieben, bei der zur Automatisierung der Folienapplikation auf die Karosserie ein rechteckiges Stück vorbestimmter Größe einer Schutzfolie von einer Vorratsrolle unter Einsatz eines robotergeführten Spannrahmens an der nichthaftenden Seite erfaßt, von der Vorratsrolle abgezogen und abgeschnitten wird. Vor dem Anlegen des Folienzuschnittes an die Karosserie werden im frei ausgespannten Zustand Abreißlinien im Bereich von Anbauteilen mit einer beheizten mechanisch entlang definierte-Konturlinien geführten Zackenscheibe von deren nicht klebender Folienseite her perforiert. Erst dann wird die derart präparierte, faltenfrei im Spannrahmen ausgespannte Schutzfolie von dem Handhabungsroboter auf die zugehörige Oberflächenpartie lagegerecht abgesenkt und blasenfrei angelegt. Anschließend wird die Folie mit einer Streichleiste angedrückt. Da der Spannrahmen beim und nach dem Aufbringen der Folie zum möglichst blasen- und faltenfreien Aufbringen der Schutzfolie einen bestimmten Arbeitsraum benötigt und bestimmte Schwenkbewegungen ausführt, ist er nur zu einer Verwendung für die Folienapplikation auf frisch lackierte Rohkarosserien geeignet. Eine Verwendung des beschriebenen Spannrahmens zur Applikation von Folien auf fertig montierte Fahrzeuge ist nur sehr stark eingeschränkt möglich, da verschiedene eingebaute Teile, wie beispielsweise die Windschutzscheibe, Außenspiegel, Antenne, Kühlerfigur etc., den benötigten Arbeitsraum einschränken und die notwendigen Schwenkbewegungen des Spannrahmens beeinträchtigen. Des weiteren ist der Folienapplikation mit dem beschriebenen Spannrahmen vor der Montage ein manueller Arbeitsschritt nachgeordnet, in welchem überstehende, vorperforierte Folienabschnitte entfernt werden müssen. Beim fertigen Fahrzeug ist es aber oft nicht möglich, ein größeres überstehendes Folienstück auf den entsprechenden Fahrzeugbereich aufzulegen und anschließend die überstehende Folie entlang von Perforationslinien abzureißen, da sich die Folienüberstände schon beim Auflegen mit den Anbauteilen verkleben können oder aufgrund der Einschränkung beim Spannen der Folie das gesamte Auflegen durch die Anbauteile verhindert werden kann. Deshalb wird wo erforderlich zunächst ein kleineres, nicht überstehendes Folienstück auf die Karosserie aufgelegt. Anschließend werden die noch nicht beklebten freien Bereiche mit Folienscreifen abgeklebt.

Ausgehend hiervon liegt der Erfindung die Aufgabe zugrunde, ein Verfahren und eine Vorrichtung zur Applikation von Schutzfolie auf Fahrzeugkarosserien bereitzustellen, das für den Anwender ein erhöhtes Maß an Flexibilität bietet. Insbesondere ist es Ziel der Erfindung, bei weitergehender Automatisierung, d.h. Einsparung an Arbeitskräften, ein Verfahren bzw. eine Vorrichtung vorzuschlagen, das bzw. die ortsunabhängig sowohl zur Applikation von Folie auf lackierte Rohkarosserien als auch auf fertig montierte Fahrzeuge einsetzbar ist.

Zur Lösung dieser Aufgabe wird ein Verfahren mit den Merkmalen des Anspruches 1 sowie eine Vorrichtung mit den Merkmalen des Anspruches 13 vorgeschlagen.

Erfindungsgemäß wird die zu applizierende Folie in Form von mindestens einer Vorratsrolle in einer Folienbereitstellungsvorrichtung bereitgestellt. Hierzu wird die Folie zwischen zwei Halteelementen, vorzugsweise Saugschienen, im ausgespanntem Zustand gehalten. Innerhalb dieses ausgespannten Folienstücks können mittels eines Perforationswerkzeugs Konturlinien in die Folie perforiert werden, entlang denen entsprechende Folienteile wieder abgezogen werden können. Dies kann auch beim fertigen Fahrzeug erforderlich sein, um z.B. Waschdüsen freizulegen, damit deren volle Funktion während der Überführungsfahrt gewährleistet wird.

Das Perforationswerkzeug besitzt vorzugsweise mindestens eine beheizte Zackenscheibe, die schwimmend aufgehängt ist. Alternativ kann die Perforation auch mit beheizten Ausstechern oder mit einem Laser durchgeführt werden.

Das Perforationswerkzeug kann durch unterschiedliche Komponenten geführt werden, z.B. SCARA-Roboter, Knickarmroboter oder X-Y-Verfahreinheit.

Erfindungsgemäß wird die zu applizierende Folie in einer Folienbereitstellungsstation von mindestens einem Industrieroboter mittels mindestens einem Halteelement, vorzugsweise einer Saugschiene, von einer Vorratsrolle in vorbestimmter Länge abgezogen und im gespannten Zustand in Wartestellung gehalten. Das derart gespannt gehaltene Folienstück wird von mindestens einem weiteren Industrieroboter mit mindestens einem Halteelement, vorzugsweise einer Saugschiene, am hinteren Ende des abgezogenen Folienstücks aufgenommen. Dann wird das ausgespannte Folienstück von der Vorratsrolle abgeschnitten und anschließend auf eine Fahrzeugkarosserie aufgebracht. Nach dem Aufbringen der Folie wird in der gleichen oder einer weiteren Station mittels mindestens eines Industrieroboters mit mindestens einem Abklebewerkzeug Folie in Form von Folienbändern auf noch freie Karosserieteile appliziert, die von den zuvor aufgebrachten rechteckigen Folienabschnitten noch nicht abgedeckt sind. Des weiteren erfolgt in dieser Station ein Abkleben von Windangriffskanten der aufgebrachten Folie mittels Sicherungsklebeband. Daran anschließend werden von der Folie überklebte Karosseriefugen und -sicken freigeschnitten.

Durch die erfindungsgemäße Übernahme der zu applizierenden Folie mit zwei parallel zueinander ausgerichtet an gegenüberliegenden Folienenden angreifenden Halteelementen, vorzugsweise Saugleisten, wird eine automatisierte Folienapplikation auf fertig montierte Kraftfahrzeugen ermöglicht, da nun kein das gesamte Folienstück umgebender starrer Spannrahmen mehr vorgesehen ist, der durch seinen Arbeitsraum oder seine Schwenkbewegungen beispielsweise in einen im fertigen Fahrzeug von der Windschutzscheibe eingenommenen Bereich eintauchen müßte. Für die Handhabung des zu applizierenden Folienabschnittes mittels zweier Saugleisten können die Saugleisten mit der von ihnen gehaltenen Folie über den Karosserieabschnitt verfahren, auf welchen die Folie aufgebracht werden soll und durch gleichmäßiges Absenken die Folie auf diesem Karosserieteil aufbringen. Die Saugleisten werden dabei so geführt, daß sie bei dem Absenken der Folie auf den Karosserieteil neben diesem Karosserieteil vorbeigeführt werden, während die anderen beiden Kanten der Folie freiliegen.

Um den Arbeitsraum des robotergeführten Perforationswerkzeugs, der robotergeführten Halteelemente für die Folie sowie des robotergeführten Abklebewerkzeugs zu vergrößern, werden die Industrieroboter vorzugsweise auf Linearachsen gesetzt. In vorteilhafter Ausführung kann hierzu eine über mehrere Stationen reichende Linearachse pro Fahrzeugseite eingesetzt werden, auf der alle Roboter der entsprechenden Seite auf jeweils eigenen Verfahrschlitten sitzen. Dadurch können die Arbeiten zur Taktzeitoptimierung sowohl auf jeweils eine Station konzentriert als auch über mehrere Stationen verteilt werden.

Die Erfindung ist anhand von Ausführungsbeispielen in der Zeichnung schematisch dargestellt und wird im folgenden unter Bezugnahme auf die Zeichnung ausführlich beschrieben.

Figur 1 zeigt das Layout einer Fertigungslinie zum automatisierten, serienmäßigen Applizieren von Schutzfolie auf Kraftfahrzeuge in Draufsicht.

Figur 2 zeigt eine Vorderansicht der Station zur Bereitstellung und Perforation von Schutzfolie der Applikationslinie der Figur 1.

Figur 3 zeigt in perspektivischer Darstellung schematisch den Aufbau der Station zur Bereitstellung und Perforation der Figur 2.

Figur 4 zeigt in seitlicher Ansicht schematisch eine Folienrollenanordnung mit drei übereinanderliegenden Vorratsrollen gemäß Figur 2.

Figur 5 veranschaulicht in schematischer Abfolge ein erfindungsgemäßen Abziehen von Folie von der Vorratsrolle und deren Übernahme in die Folgestation.

Figur 6 zeigt eine Vorderansicht der Station für das Bekleben des PKWs mit Schutzfolie der Applikationslinie der Figur 1.

Figur 7 zeigt in einem vergrößerten Ausschnitt der Figur 5 das Ausrichten von zu applizierender Schutzfolie über einem zu beklebenden Fahrzeugdach.

Figur 8 zeigt in Fortsetzung zu Figur 7 das Absenken und Auflegen der Folie auf das Fahrzeugdach.

Figur 9 zeigt in Fortsetzung der Figur 8 das Anpressen der Folie auf das Fahrzeugdach.

Figur 10 zeigt in Fortsetzung von Figur 9 das Rakeln der auf das Fahrzeugdach aufgebrachten Folie.

Figur 11 zeigt in vergrößerter Darstellung eine Saugleiste zum Halten von Schutzfolie.

Figur 12 zeigt eine Vorderansicht der Station zum Abkleben eines PKWs mit Folien- und/oder Sicherheitsband.

Figur 13 zeigt ein fertig mit Folie, Folienstreifen und Klebeband versehenes Kraftfahrzeug in Draufsicht.

Figur 14 zeigt in Vorder- und Seitenansicht ein erfindungsgemäßes Abklebewerkzeug.

Figur 15 zeigt in Seiten- und Hinteransicht einen zur Förderung entlang der Applikationslinie auf einer Doppelstrang-Schleppkette angeordneten PKW.

Figur 16 veranschaulicht in seitlicher schematischer Darstellung die Fahrzeugpositionierung in Längsrichtung.

Figur 17 veranschaulicht das Prinzip der Fahrzeugpositionierung in Querrichtung mittels längs angeordneter Rollen.

Figur 18 verdeutlicht das Prinzip der Fahrzeugpositionierung in Querrichtung mittels querverschiebbarer Schwimmschlitten.

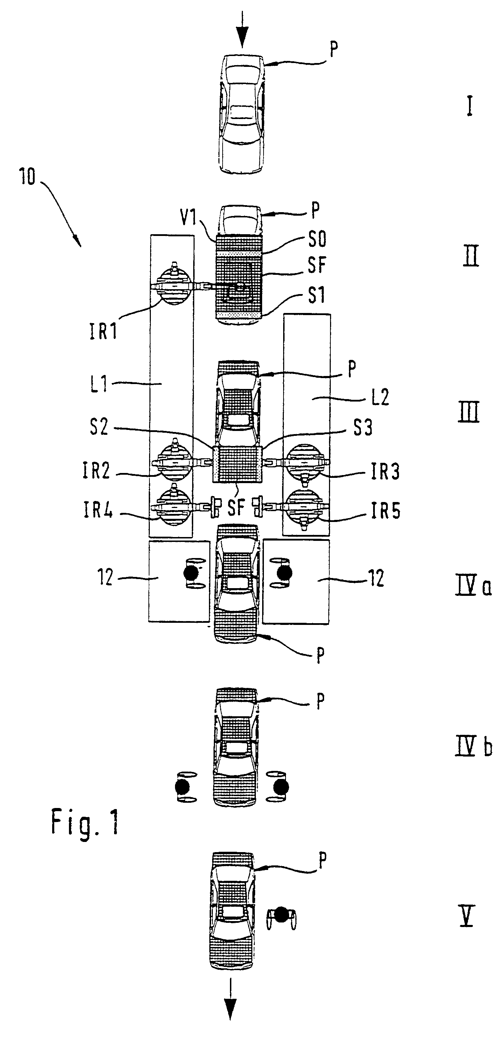

Figur 1 zeigt in Draufsicht eine Applikationslinie 10 zum automatisierten, serienmäßigen Bekleben von Kraftfahrzeugen mit Schutzfolie. Die in Figur 1 dargestellte Applikationslinie 10 zeigt das erfindungsgemäße Applizieren von Schutzfolie auf Karosserien am Beispiel eines getaktet entlang der Applikationslinie 10 geförderten PKWs P. Das erfindungsgemäße Verfahren ist jedoch auf alle Arten von Kraftfahrzeugen, insbesondere auch auf Lieferwagen, LKWs und dergleichen anwendbar. Des weiteren ist das erfindungsgemäße Applizieren von Schutzfolie nicht auf das Bekleben bereits fertig montierter Fahrzeuge beschränkt, sondern kann auch in die Fertigungslinie integriert werden und beispielsweise auf lackierte Rohkarosserien angewendet werden.

Die Applikationslinie 10 umfaßt eine erste Station I, in welcher der PKW P in das (in der Figur 1 nicht näher dargestellte) Fördersystem F der Applikationslinie 10 eingebracht wird. Dies ist vom Prinzip her beispielsweise mit dem Einfahren eines PKWs in eine Waschstraße vergleichbar.

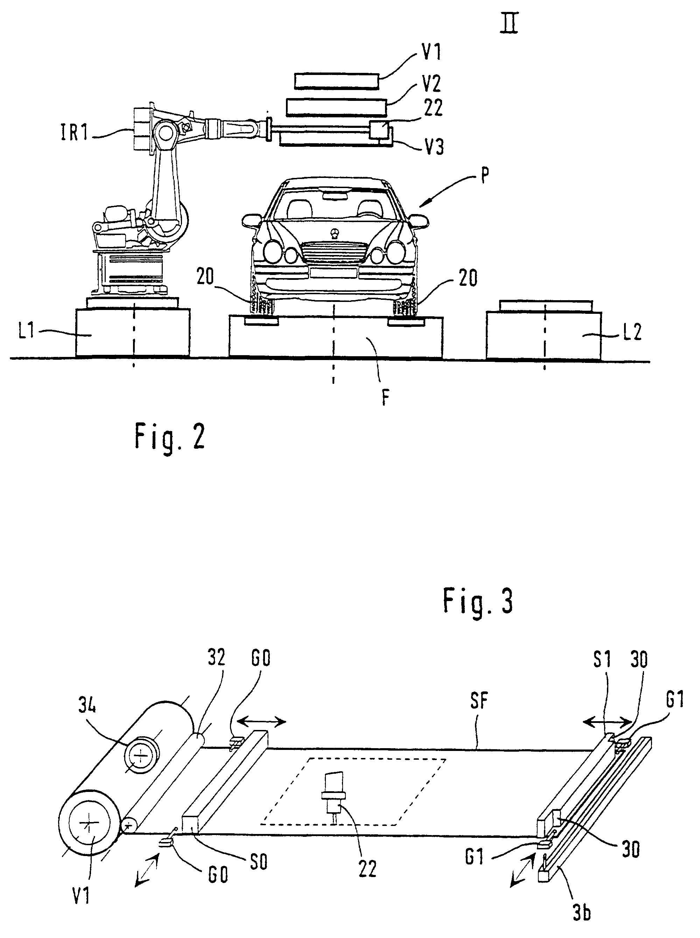

Eine nachgeordnete Bereitstellungsstation II von zu applizierender Schutzfolie umfaßt mindestens eine Vorratsrolle V1 für Schutzfolie, die mittels geeigneter Halteeinrichtungen in faltenfreien ausgespanntem Zustand bereitgestellt wird. Die Station II kann des weiteren wie dargestellt einen ersten Industrieroboter IR1 umfassen, der ein Perforationswerkzeug aufweist und zum Perforieren der in ausgespanntem Zustand bereitgestellten Schutzfolie dient. Die Station II wird nachfolgend unter Bezugnahme auf die Figuren 2 bis 4 ausführlich beschrieben.

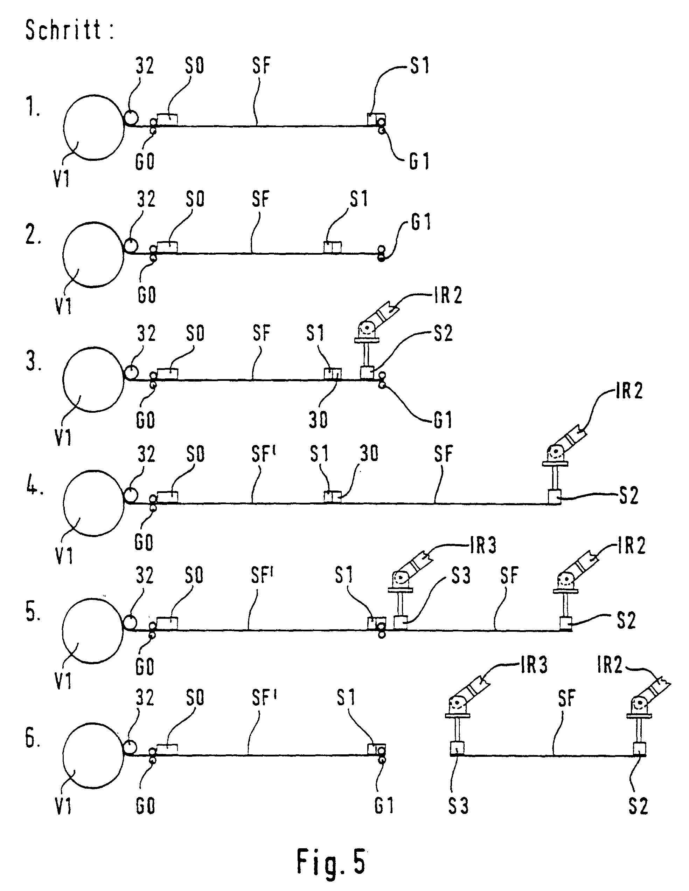

In einer weiteren Station III zum Bekleben des PKWs P mit Schutzfolie sind insgesamt vier Industrieroboter IR2 bis IR5 vorgesehen. Die Industrieroboter IR2 bis IR5 sind jeweils paarweise gegenüberliegend auf Linearachsen L1 und L2 verfahrbar angeordnet. Das erste Paar IR2, IR3 der Industrieroboter dient als Applikationsroboter und verfügt jeweils über eine Saugleiste S2 bzw. S3, mittels welchen die in der Station II bereitgestellte Folie durch Verfahren der Applikationsroboter IR2, IR3 entlang der Linearachsen L1, L2 übernommen, gehalten, über dem zu beklebenden Bereich des PKW P ausgerichtet und aufgelegt wird. An den Saugleisten der Applikationsroboter IR2 und IR3 sind vorteilhafterweise Rakeln angebracht, die ein- und ausgefahren werden können. Mit den Rakeln kann somit direkt nach dem Auflegen der Folie die Folie an die Karosserie angerakelt werden. Mittels der Industrieroboter IR4, IR5 erfolgt im Nachgang an das Bekleben des PKWs P mit großflächigen Folienstücken ein Abkleben noch nicht beklebter Karosserieteile mit Folienstreifen sowie ein Abkleben von windbeaufschlagten Folienrändern mit Sicherungsband. Zusätzlich befindet sich vorteilhafterweise am Abklebewerkzeug ein Schneidwerkzeug, mit dem die Fugen und Spalten sowie Motorhaubensicken aufgeschnitten werden können. Aufbau und Funktionsablauf der Station III wird nachfolgend unter Bezugnahme auf die Figuren 5 bis 14 ausführlich beschrieben.

An die Station III schließen sich Stationen IVa und IVb zur Durchführung manueller Restarbeiten an. Die Station IVa umfaßt zwei jeweils links und rechts des PKWs P angeordnete Podeste 12, um manuelle Arbeiten am Dach zu erleichtern. Die manuellen Arbeiten an der Motorhaube und am Heckdeckel des PKWs P werden in der Station IVb ebenerdig ausgeführt.

Als letzte Station der Applikationslinie 10 schließt sich die Ausfahrstation V an, in der der PKW P aus dem Fördersystem F aus der Applikationslinie ausgebracht wird.

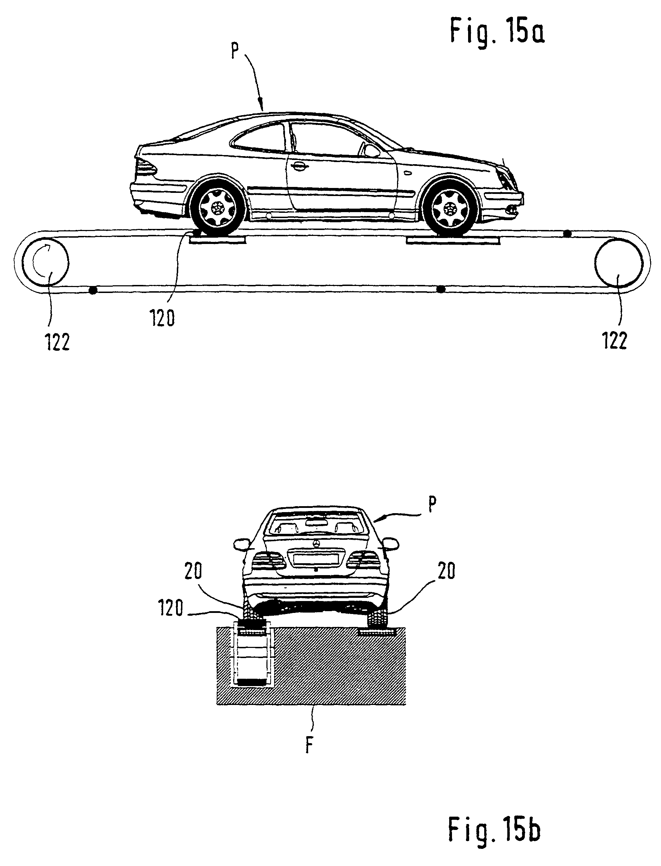

Figur 2 zeigt in Vorderansicht den PWK P in der Station II der Applikationslinie 10. Der PKW P steht mit seinen Rädern 20 auf dem Fördersystem F auf, welches nachfolgend unter Bezugnahme auf die Figuren 15 bis 18 ausführlich beschrieben wird.

In der Darstellung der Figur 2 ist links neben dem PKW P der Industrieroboter IR1 auf der podestartig ausgebildeten Linearachse L1 angeordnet. Der Industrieroboter IR1 kann, muß jedoch nicht, entlang der Linearachse L1 verfahrbar sein.

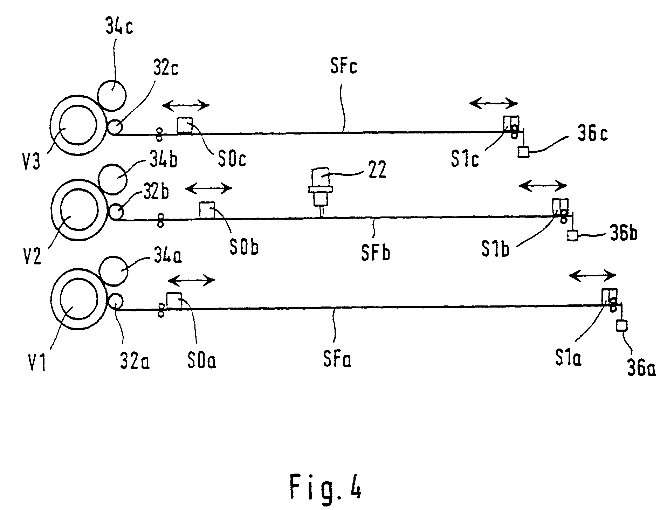

Oberhalb des PKWs P sind drei übereinander angeordnete Vorratsrollen V1 bis V3 angeordnet, von denen Folie abgezogen und in der Station II bereitgestellt wird (vgl. auch Figuren 3 und 4).

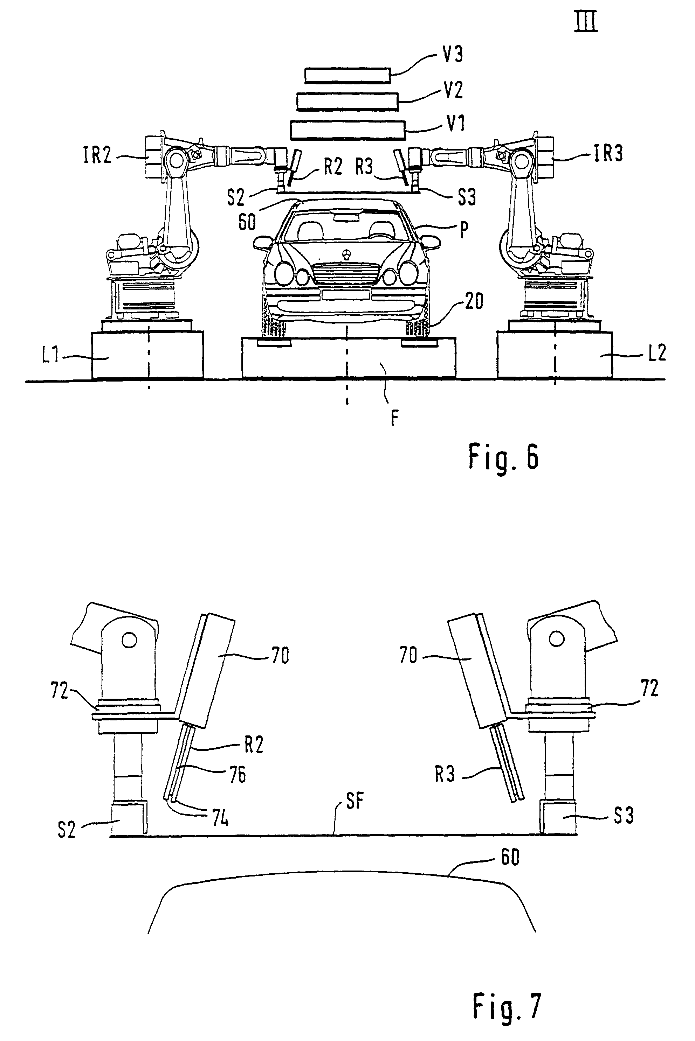

Der Industrieroboter IR1 ist mit einem Perforationswerkzeug 22 versehen, mit welchem er die von den Vorratsrollen V1 bis V3 abgezogene und bereitgestellte Schutzfolie perforieren kann. Die Perforation der Folie erfolgt also schon in der Station II, also vor der Übernahme der abgezogenen Folie durch die Applikationsroboter IR2 und IR3. Dadurch kann das Perforieren der Folie für den als nächstes zu beklebenden Abschnitt des PKWs P in der Zeit erfolgen, in der die Applikationsroboter IR2, IR3 die Folie auf den im Moment zu beklebenden Abschnitt des PKWs P auflegen. Während der Übernahme der Folie durch die Applikationsroboter IR2, IR3 wird gleichzeitig weitere Folie von der entsprechenden Vorratsrolle abgezogen und zwischen den beiden Saugleisten S0, S1 der Folienbereitstellungsstation II für das nachfolgende Perforieren ausgespannt. Dieser Funktionsablauf wird nachfolgend unter Bezugnahme auf die Figur 6 ausführlich beschrieben. Die Perforation kann mit einem geeigneten Werkzeug, beispielsweise einem beheizten Zackenrad, einem beheizten Ausstecher oder auch einem Laser erfolgen. Derartige Perforationswerkzeuge werden von der Anmelderin in der deutschen Patentanmeldung 197 18 204.6 beschrieben. Die Führung des Perforationswerkzeugs kann mit einem oder mehreren Robotern, beispielsweise SCARA-Roboter, 6-Achs-Knickarm-Roboter oder anderen Robotertypen erfolgen. Das Perforationswerkzeug kann beispielsweise derart ausgeführt sein, daß das Kurvenfahren und damit Perforieren von gekrümmten Konturen über die Ansteuerung/Drehung der Roboterhandachse direkt erfolgt (vgl. die vorstehend benannte deutsche Patentanmeldung 197 18 204.6). In einer anderen Ausgestaltung der Erfindung wird das Perforationswerkzeug von dem Roboter vorwiegend geradlinig in einer oder mehreren Ebenen geführt. Das Kurvenfahren und damit Perforieren von gekrümmten Konturen erfolgt durch eine zusätzliche gesteuerte Drehachse im Perforationswerkzeug selbst. Das Perforationswerkzeug bzw. die zusätzliche Drehachse kann dabei direkt oder über eine Art Ausleger am Roboterflansch angebracht sein. Alternativ kann die Führung des Perforationswerkzeugs in einer oder mehreren Ebenen auch über eine oder mehrere x-y-Verfahreinheiten erfolgen. Das Kurvenfahren und damit Perforieren von gekrümmten Konturen erfolgt ebenfalls durch eine zusätzliche gesteuerte Drehachse im Perforationswerkzeug selbst.

Es ist natürlich auch möglich, daß die Perforation der Schutzfolie erst nach der Übernahme und dem Abschneiden der Folie von der Vorratsrolle durchgeführt wird. Die Schutzfolie wird dann während der Perforation durch die Applikationsroboter IR2, IR3 mit den Saugleisten S2, S3 gehalten.

Figur 3 zeigt detailliert in schematischer Darstellung die Bereitstellung von Folie in der Station II. Dazu wird Folie in einer vorbestimmten Länge von der Vorratsrolle V1 abgezogen und zwischen den beiden Saugleisten S0 und S1 faltenfrei ausgespannt. Die beiden Saugleisten S0 und S1 weisen im Gegensatz zu den von der Anmelderin in den erwähnten Anmeldungen beschriebenen kammförmigen Leisten im wesentlichen einen rechteckförmigen Querschnitt auf. Lediglich an ihren Längsenden sind Aussparungen 30 vorgesehen, um das Zugreifen von jeder Saugleiste S0, S1 zugeordneten Greifelementen zu erleichtern.

Bei zwischen den Saugleisten S0, S1 ausgespannter Folie SF sind die jeweils zugeordneten Greifelemente G0, G1 geschlossen und halten die abgezogene Folie SF im ausgespannten Zustand fest. Diese Maßnahme dient zum einen als Sicherung, falls die Saugleistung in den Saugleisten S0, S1 abfallen sollte, zum anderen wird durch die Greifelemente G0, G1 die Übergabe der abgezogenen Folie SF an die Applikationsroboter IR2, IR3 erleichtert. Insbesondere müssen durch die Verwendung der Greifelemente G0, G1 keine kammförmigen Saugleisten verwendet werden.

Zum geregelten und definierten Abziehen der Folie von der Vorratsrolle V1 ist des weiteren eine Tänzerwalze 32 vorgesehen, durch die eine Abziehgerade für die Folie definiert wird. Des weiteren ist ein die Vorratsrolle V1 beaufschlagendes Meßrad zur Messung der abgezogenen Folienlänge vorgesehen. Erreicht die Gesamtlänge an abgezogener Folie einen vorgegebenen Maximalwert, so wird durch das Meßrad ein Signal ausgelöst, daß die Vorratsrolle gewechselt werden muß. Dieses Wechseln kann sowohl manuell als auch automatisiert erfolgen.

Vorteilhafterweise werden Vorratsrollen verwendet, deren Folienvorrat mindestens für einen Schichtbedarf ausreicht. Dadurch ist gewährleistet, daß die jeweilige Vorratsrolle nur einmal pro Schicht ausgewechselt werden muß.

Das erstmalige Einspannen von Folie zwischen den beiden Saugleisten S0, S1 kann manuell oder teilmechanisiert erfolgen. Der Folienanfang wird manuell von der Rolle abgezogen und anschließend wird die Folie bis zur vorderen Saugleiste S1 abgezogen und dann durch beide Saugleisten S0, S1 angesaugt. Für das manuelle Vorziehen der Folie sind entweder Arbeitskräfte oder eine entsprechende Hilfsvorrichtung erforderlich. Alternativ hierzu kann auch eine vollautomatische Folienrollenwechseleinheit mit manueller Vorbestückung eingesetzt werden.

Wie bereits unter Bezugnahme auf Figur 2 erwähnt, können in der Folienbereitstellungsstation II mehrere Folienvorratsrollen insbesondere übereinander oder gegebenenfalls auch nebeneinander angeordnet werden und entsprechende abgezogene Folienabschnitte übereinander bzw. nebeneinander bereitgestellt werden. Jeder der bereitgestellten Folienabschnitte wird dann entsprechend von zwei Saugleisten ausgespannt gehalten und von dem Perforationswerkzeug 22 des Industrieroboters IR1 sukzessiv perforiert.

Wie in Figur 4 dargestellt, erfolgt die Anordnung der entsprechenden Saugleisten derart, daß die die vordere Folienkante haltenden Saugleisten S1a, S1b, S1c gestaffelt angeordnet sind, damit der die Folie SF übernehmende Applikationsroboter der Station III die Folie mit einer geradkantigen Saugleiste übernehmen kann. Der Abstand und die Anordnung der hinteren Saugleisten S0a, S0b, S0c zu den vorderen Saugleisten S1a, S1b, S1c wird entsprechend dem erforderlichen Perforationsbereich gewählt. Die hintere Saugleiste S0 ist gegebenenfalls verfahrbar, um die lichte Weite zwischen den Saugleisten S0 und S1 dem erforderlichen Perforationsbereich anpassen zu können. Dadurch kann die Folie beim Perforieren besser gespannt werden.

Bei mehreren übereinander angeordneten Vorratsrollen können diese auch derart gestaffelt angeordnet sein, daß die Vorratsrollen von oben mittels einer Hilfsvorrichtung, beispielsweise einem dazu geeigneten Hebezeug, auswechselbar sind. Alternativ hierzu kann auch eine Einschwenkvorrichtung vorgesehen sein, bei der die Vorratsrollen seitlich von der Bereitstellung aufgenommen, dann auf die richtige Höhe angehoben und anschließend durch eine Schwenkbewegung in die Folienbereitstellung eingebracht werden. Die Entnahme des leeren Rollenkerns erfolgt in umgekehrter Reihenfolge. Hierfür ist eine Anordnung der Vorratsrollen direkt übereinander vorteilhafter.

Die Übernahme des abgezogenen Folienstücks SF durch die Applikationsroboter IR2, IR3 der Station III aus der Bereitstellungsstation II ist in Figur 5 veranschaulicht.

Wie bereits vorstehend erläutert, ist das abgezogene Folienstück SF zwischen den beiden Saugleisten S0, S1 faltenfrei ausgespannt und die den Saugleisten S0, S1 zugeordneten Greifelemente G0, G1 sind geschlossen (Schritt 1).

In Schritt 2 wird die Saugleiste S1 dann belüftet und in Richtung der Saugleiste S0 ein Stück, beispielsweise etwa 100 bis 200 mm, verfahren. In dieser Stellung saugt die Saugleiste S1 dann die Folie wieder an. Das vordere Folienende wird in diesem Zustand nur durch die Greifelemente G1 gehalten.

In Schritt 3 fährt der Applikationsroboter IR2 mit seiner Saugleiste S2 direkt hinter die Greifelemente G1 und saugt das Folienende an. Die geschilderte Maßnahme des Verfahrens der Saugleisten und des zwischenzeitlichen Haltens der Folie mittels der Greifelemente gestattet die Verwendung von Saugleisten mit gerader Kante gegenüber den bisher verwendeten kammförmigen Saugleisten. Sobald das Folienende an der Saugleiste S2 des Applikationsroboters IR2 angesaugt ist, werden die Greifelemente G1 geöffnet und seitlich, d.h. senkrecht zur Folienabziehrichtung so weit weggefahren, daß der Applikationsroboter IR2 die Folie mit seiner Saugleiste S2 in Abziehrichtung der Folie ziehen kann. Zum Abziehen der Folie werden die beiden Saugleisten S0, S1 belüftet und die Greifelemente G0 geöffnet.

Der Applikationsroboter IR2 zieht mit der Saugleiste S2 die Folie von der Rolle bis auf eine gewünschte Länge ab (vgl. Schritt 4).

Daraufhin fährt die Saugleiste S1 in Schritt 5 wieder an ihre ursprüngliche Position zurück nach vorn und saugt die Folie an dieser Stelle an. Die Greifelemente G1 fahren ebenfalls in ihre vorherige Position zurück und greifen die Folie im Bereich der entsprechenden Aussparungen 30 der Saugleiste S1. Des weiteren saugt auch die Saugleiste S0 wieder Folie an und deren zugeordnete Greifelemente G0 werden geschlossen. Die Folie ist nun wieder zwischen den beiden Saugleisten S0, S1 der Folienbereitstellung gespannt. Daraufhin fährt der dem Applikationsroboter IR2 zugeordnete Applikationsroboter IR3 mit seiner Saugleiste S3 an die sogenannte Abnahmeposition der Folie direkt vor der Saugleiste S1 der Folienbereitstellung und saugt dort die Folie an.

Im Folgeschritt 6 schneidet dann die (in der Figur 5 nicht näher dargestellte) Abschneideeinheit 36 mit ihrem Messer 38 die Folie zwischen der Saugleiste S1 der Folienbereitstellung und der Saugleiste S3 des Applikationsroboters IR3 ab.

Somit wurde das bereits abgezogene und in ausgespanntem Zustand zwischen den Saugleisten S0, S1 gehaltene, jedoch noch nicht von der Vorratsrolle V1 abgetrennte Folienstück SF durch Angreifen des Applikationsroboters IR2 mit dessen Saugleiste S2 weiter abgezogen, so daß nachfolgende Folie SF' zwischen die Bereitstellungs-Saugleisten S0, S1 transportiert wurde. Das von den Saugleisten S2, S3 der Applikationsroboter IR2, IR3 übernommene und von dem nunmehr bereitgestellten Folienstück SF' abgetrennte Folienstück SF wird dann von den Applikationsrobotern IR2, IR3 entlang der Linearachsen L1, L2 in die Applikationsstation III verfahren.

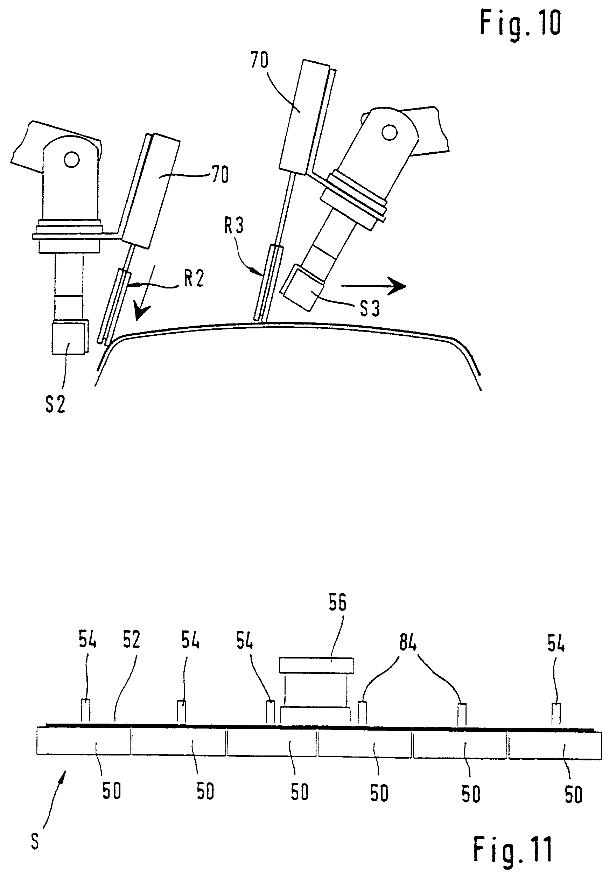

Figur 11 zeigt in seitlicher Schnittdarstellung eine Saugleiste S zur Verwendung in der Bereitstellungs- und/oder Applikationsstation. Die Saugleiste S weist einen im wesentlichen rechtwinkligen Querschnitt auf und besteht im Unterschied zu bekannten Saugleisten aus mehreren nebeneinander angeordneten Saugkammern 50, die an einem Träger 52 befestigt sind. Jeder Saugkammer 50 ist jeweils ein Vakuumanschluß 54 zugeordnet. An der in der Zeichnung nach unten weisenden Seite der Kammern 50 sind geeignete Löcher vorgesehen, um die darunterliegende Schutzfolie anzusaugen. Die Saugleiste S wird mittels eines an dem Träger 52 befestigten Flansch 56 an dem jeweiligen Industrieroboter angeordnet. Die Ausgestaltung der Saugleiste S mit mehreren nebeneinander liegenden, voneinander getrennten Kammern hat den Vorteil, daß Folien unterschiedlicher Breite durch eine Saugleiste gehandhabt werden können.

Zu diesem Zwecke werden die Vakuumanschlüsse 54 selektiv beaufschlagt.

Figur 6 zeigt in Vorderansicht die Applikationsstation III mit zwischen den beiden Applikationsrobotern IR2, IR3 stehendem PKW P. Die Applikationsroboter IR2, IR3 halten mit ihrer jeweiligen Saugleiste S2, S3 ein zu applizierendes Folienstück an dessen gegenüberliegenden Kanten. In der Darstellung der Figur 6 halten die Applikationsroboter IR2, IR3 das von ihnen gehaltene Folienstück über dem Dach 60 des PKW P.

Figur 7 zeigt in vergrößerter Detaildarstellung einen Abschnitt des Fahrzeugdaches 60 des PKWs P mit darüber ausgerichteter Folie. Bei der Positionierung der Folie über dem abzuklebenden Fahrzeugbereich herrscht in dem die Saugleisten S2, S3 beaufschlagenden Ansaugsystem ein maximal möglicher Unterdruck. Bei der Positionierung oberhalb der Motorhaube und beim Heckdeckel muß die Folie quer zu dessen Längsachse über das Fahrzeug gespannt werden, weshalb die Folienbahn nach der Übernahme aus der Bereitstellungsstation II um 90° gedreht werden muß, so daß die Saugleisten S2, S3 nicht mehr parallel, sondern quer zur Förderrichtung der Applikationslinie 10 stehen. Bei einer Applikation auf das Fahrzeugdach wird die Folie längs über das Fahrzeug gespannt, so daß ein Drehen nicht erforderlich ist. Natürlich muß bei einer anderen Anordnung der Vorratsrollen bzw. der Folienbereitstellung entsprechend vorgegangen werden.

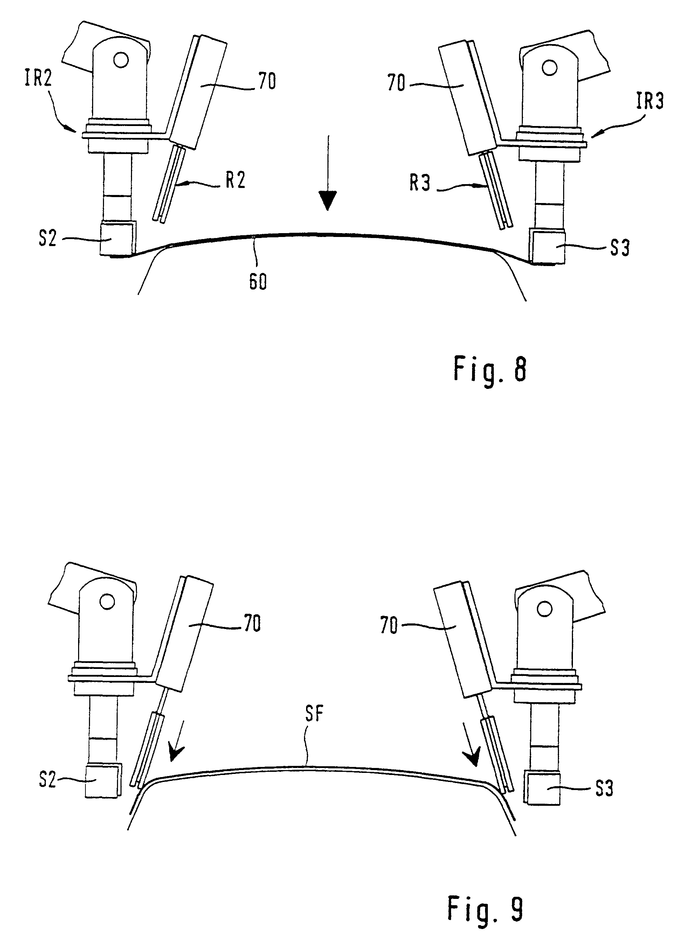

Wie aus Figur 8 ersichtlich ist, senken beide Applikationsroboter IR2, IR3 die von ihnen ausgespannt gehaltene Folie gleichmäßig auf die Karosserie, hier das Fahrzeugdach 60, in Richtung des eingezeichneten Pfeiles ab. Durch das Auflegen der Folie auf die Karosserieoberfläche entsteht eine zunehmende Spannung in der Folie. Um diese Spannung zu begrenzen, wird im Ansaugsystem ein sogenannter Bypass definiert zugeschaltet, um der Folie ein "Abgleiten" von den Saugleisten S2, S3 zu ermöglichen. Der Bypass kann bei weiterem Absenken gegebenenfalls weiter vergrößert werden. Das im Zusammenhang mit den Figuren 7 und 8 beschriebene Aufbringen von Folie auf das Karosseriedach gilt entsprechend für andere Karosseriebereiche.

Gleichzeitig können die Rakeln R2, R3 ausgefahren werden, wodurch die Folie im Randbereich mittels der ausgefahrenen Rakel R2 bzw. R3 definiert an die Karosserie angedrückt werden kann (vgl. Figur 9). Durch das Andrücken der Folie mittels der Rakeln R2, R3 wird die Folie vollends von den Saugleisten S2, S3 abgezogen. Zur Unterstützung des Abgleitens können beim Absenken die Saugleisten S2, S3 gegebenenfalls schräggestellt werden, was in der Zeichnung nicht näher dargestellt ist. Dadurch wird erreicht, daß die Folie unter einem optimalen Winkel von den Saugleisten S2, S3 abgleitet. Gleichzeitig kann gegebenenfalls die zugeordnete Rakel R2, R3 optimiert eingestellt werden.

Nach dem Auflegen der Folie wird diese wie in Figur 10 dargestellt mit ausgefahrener Rakel R2, R3 festgerakelt. Die Rakelbereiche werden je nach Erfordernis zwischen den beiden Applikationsrobotern IR2, IR3 aufgeteilt. Beispielsweise kann die Aufteilung derart erfolgen, daß bei der Motorhaube und beim Heckdeckel jeder der Applikationsroboter IR2, IR3 im wesentlichen die Hälfte des Bereiches von der Mitte nach außen rakelt, wobei ein gewisser Überlappungsbereich vorgesehen sein kann. Es ist auch denkbar, daß ein Industrieroboter von außen zur Mitte hin und der andere Industrieroboter zeitgleich von der Mitte nach außen rakelt. Beim Fahrzeugdach rakelt vorzugsweise einer der beiden Applikationsroboter von vorn nach hinten das komplette Dach. Durch eine sinnvolle Verzahnung der Verfahrbewegungen kann die Taktzeit der Applikationslinie 10 optimiert werden. So kann der bereits mit dem Rakeln der applizierten Folie fertige Applikationsroboter zur Bereitstellungsstation II zurückfahren und dort das vordere Ende des bereitgestellten Folienabschnitts übernehmen und abziehen, bis der andere Roboter mit seinem Rakelvorgang abgeschlossen hat und dann das hintere Ende des abgezogenen Folienstücks übernehmen kann.

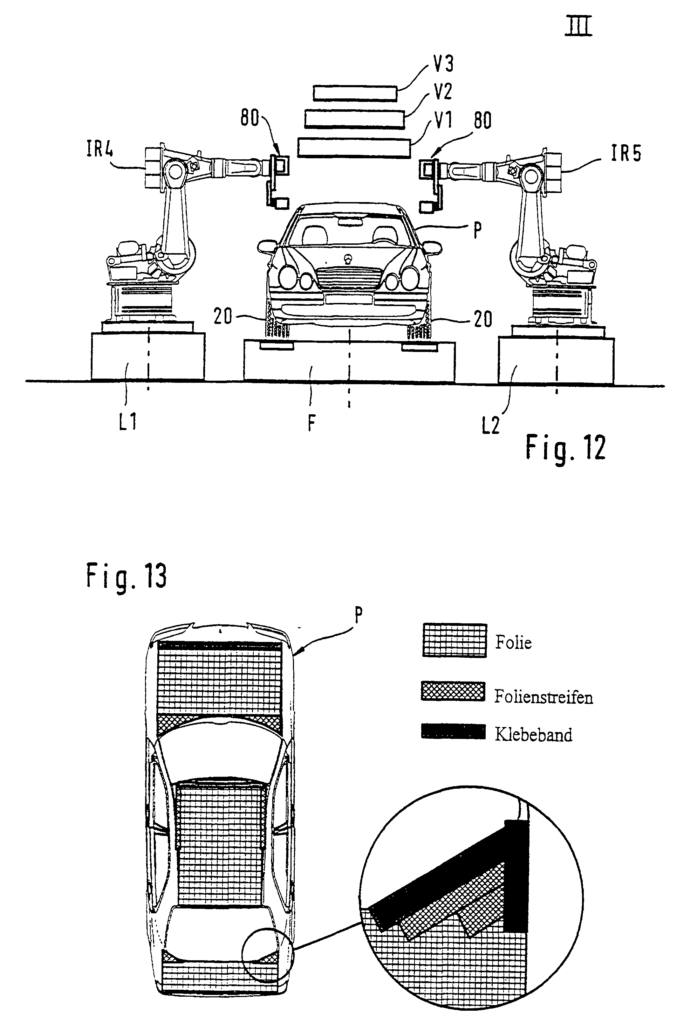

Figur 12 zeigt in Vorderansicht den nächsten Abschnitt der Applikationsstation III mit den Industrierobotern IR4 und IR5, die jeweils mit einem Abklebewerkzeug 80 bestückt sind. Die Industrieroboter IR4, IR5 dienen zum Anbringen von Folienstreifen auf Fahrzeugbereiche, die von dem von den Applikationsrobotern IR2, IR3 angebrachten im wesentlichen rechtekkigen Folienstücken noch nicht abgedeckt sind. Des weiteren dienen die Industrieroboter IR4, IR5 mit ihren Abklebewerkzeugen 80 zum Anbringen von Sicherungsklebeband an den windbeaufschlagten Folienkanten.

Das Anbringen der Folienstreifen und des Sicherungsklebebands erfolgt vorzugsweise im Anschluß an das vorstehend beschriebene Rakeln, kann jedoch gegebenenfalls auch schon vor dem Rakeln erfolgen.

Als erster Schritt werden die noch größeren freien Flächen mit einem ca. 100 mm breiten Folienstreifen abgeklebt. Hierzu kann es erforderlich sein, daß mehrere Streifen nebeneinander aufgebracht werden.

Anschließend werden Windangriffskanten der aufgebrachten Folien bzw. Folienstreifen mit einem schmaleren, ca. 40 mm breiten Sicherungsklebeband abgeklebt. Figur 13 zeigt eine Draufsicht auf den fertig beklebten PKW P mit applizierten Folienstücken auf dem Dach, der Heckklappe und der Motorhaube. Verschiedene von den Folienstücken noch nicht abgedeckte Kanten- und Eckbereiche sind mit Folienstreifen abgeklebt (vgl. auch die Detailvergrößerung der Figur 13). Schließlich sind Windangriffskanten mit Sicherungsklebeband abgeklebt (vgl. auch die Detailvergrößerung). Abschließend werden die Fugen und Spalten zwischen Motorhaube und Kotflügel sowie Heckdeckel und Kotflügel freigeschnitten.

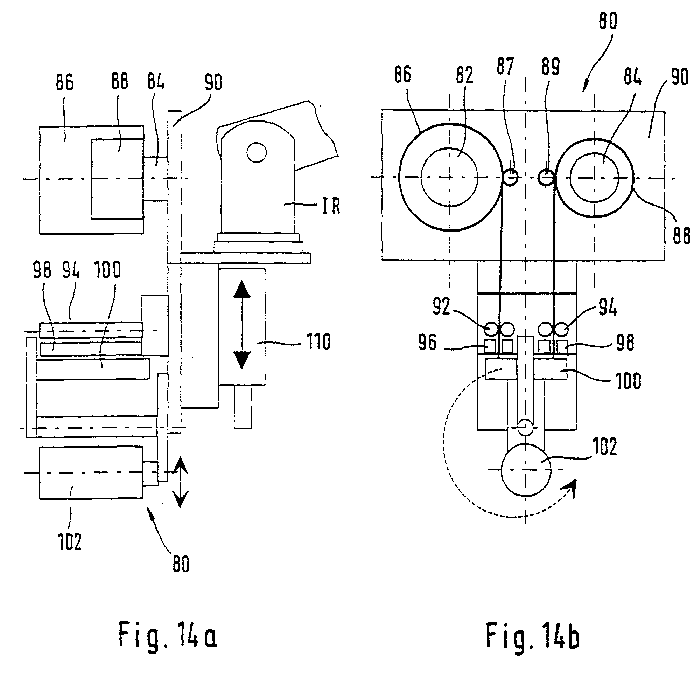

Das Abkleben erfolgt mit dem Abklebewerkzeug 80, das nachfolgend unter Bezugnahme auf die Figur 14 näher erläutert ist. In dem Abklebewerkzeug kann gegebenenfalls auch noch ein Schneidwerkzeug (Messer und/oder Heißluftfön) integriert sein, um die überklebten Fugen und Sicken der PKW-Karosserie aufschneiden zu können.

Figur 14 zeigt ein Ausführungsbeispiel eines Abklebewerkzeugs zur Verwendung mit der Erfindung in seitlicher Darstellung (Figur 14a) sowie in Draufsicht (Figur 14b). Das Abklebewerkzeug 80 umfaßt in der dargestellten Ausführungsform zwei Halterungen 82, 84 für jeweils eine Folienrolle 86 und eine Rolle 88 mit Sicherungsklebeband. Zum definierten Abziehen besitzt jede Rolle eine eigene Tänzerwalze 87, 89. Die Halterungen 82, 84 sind an einer Platte 90 befestigt, die wiederum mit dem Roboterarm eines der Industrieroboter IR4, IR5 verbunden ist.

Die Platte 90 ist in der Darstellung der Figur 14 nach unten verlängert und dient des weiteren zur Befestigung von den auf den Halterungen 82, 84 gehalterten Rollen zugeordneten Bandhaltern 92, 94 und den Bandhaltern nachgeordneten Abschneideeinheiten 96, 98. Unterhalb der Abschneideeinheiten 96, 98 ist ein Bandgreifer 100 sowie eine Andrückrolle 102 vorgesehen.

Mit dem beschriebenen Abklebewerkzeug 80 können nach dem gleichen, nachfolgend beschriebenen Prinzip sowohl der Folienstreifen von der Folienrolle 86 als auch das Sicherungsklebeband von der Rolle 88 in beliebiger Reihenfolge nacheinander aufgebracht werden. Hierzu wird das jeweils gewünschte Band mit dem Bandgreifer 100 am Bandanfang gegriffen und dann im Sinne des in der Figur 14b eingezeichneten Pfeiles um die Andrückrolle 102 geführt, so daß die klebende Seite des gegriffenen Bandes nach außen, d.h. unten zeigt. Nun kann das Abklebewerkzeug 80 mit der Andrückrolle 102 auf den zu beklebenden Karosserieabschnitt abgesenkt werden, so daß der um die Andrückrolle 102 anliegende Bandanfang mit seiner klebenden Seite an der Karosserie anliegt und anhaftet.

Daraufhin läßt der Bandgreifer 100 das Band los und fährt in seine in der Figur dargestellte Ruhestellung weiter. Durch leichtes Rückwärtsfahren des Abklebewerkzeuges 80 bzw. der Andrückrolle 102 wird der Bandanfang paßgerecht angedrückt. Anschließend fährt das Abklebewerkzeug 80 vorwärts über die Karosserie und drückt über die Andrückrolle 102 das Band auf die Karosserie auf. Die Andrückrolle 102 ist vorteilhafterweise tänzelnd aufgehängt, um den notwendigen Anpreßdruck zu erzielen, der Karosseriekontur optimal folgen zu können und Karosserietoleranzen auszugleichen.

Das Abrollen des Sicherungsklebebandes bzw. des Folienstreifens kann beispielsweise durch einen Bandzug über das bereits angeklebte Bandstück, über einen Friktionsantrieb, bei dem das Band eine Antriebsrolle umschlingt, oder durch einen Bandrollenantrieb (entweder direkt oder über eine Antriebsrolle oder Tänzerwalze) erfolgen.

Zur Vermeidung von zu starken Zugkräften auf das Band während der Applikation sollte der Bandabzug geregelt erfolgen. Hierzu kann beispielsweise der Friktionsantrieb bzw. der Bandrollenantrieb über die Bandzugkraft mittels einer Umlenkwalze, welche auf einer Wippe angeordnet ist, geregelt werden.

Nach Aufbringen der gewünschten Bandlänge abzüglich eines zu berücksichtigenden Abschneidenachlaufs wird das Band mit der Abschneideeinheit 96 oder 98 paßgenau abgeschnitten und der Abschneidenachlauf wird durch weiteres Vorwärtsfahren der Andrückrolle 102 angedrückt.

Anschließend greift der Bandgreifer 100 den Bandanfang des nächsten erforderlichen Bandes und der Applizierzyklus beginnt von neuem. Um ein definiertes Bereithalten und damit Greifen des Bandanfangs durch den Bandgreifer 100 zu gewährleisten, wird das Band vor dem Abschneiden durch die Abschneideeinheit 96 oberhalb des Schnittes von dem entsprechenden Bandhalter 92, 94 festgehalten. Die Bandhalter 92, 94 und der Bandgreifer 100 sind so ausgeführt, daß das Band nicht an ihnen festklebt. Dies wird beispielsweise durch eine Ausgestaltung der Oberfläche mit Zacken oder Noppen und/oder aus entsprechendem Antihaft-Material erreicht.

Es ist auch denkbar, daß ein Abklebewerkzeug nur die Komponenten zur Halterung und Handhabung für eine Rolle besitzt und daß bei Bedarf ein oder mehrere Abklebewerkzeuge nebeneinander an einem Roboter angebracht werden. Dies hätte den Vorteil, daß jedes Abklebewerkzeug für den jeweiligen Rollen/Bandtyp optimiert werden kann. Die Abklebewerkzeuge können dann beliebig nacheinander eingesetzt werden. Hierzu werden dann die entsprechenden Andrückrollen bei Bedarf aus- oder eingefahren.

Vorteilhafterweise umfaßt das Abklebewerkzeug 80 noch ein Schneidewerkzeug 110, das in dem dargestellten Ausführungsbeispiel an der Rückseite der Platte 90 angeordnet ist. Das Schneidewerkzeug 110 ist verfahrbar angeordnet und umfaßt ein Messer und/oder einen Heißluftfön zum Freischneiden von überklebten Spalten und Sicken. Ein derartiges Schneidewerkzeug ist von der Anmelderin ausführlich in der deutschen Patentanmeldung 197 18 204.6 beschrieben.

Des weiteren kann das Abklebewerkzeug eine (nicht näher dargestellte) Rakel mit kleiner Breite zum Nachrakeln der Folie, Folienstreifen bzw. Sicherungsklebestreifen und/oder zum Rakeln von bestimmten Karosseriebereichen umfassen. Diese Rakel wird vorteilhafterweise auf einem (ebenfalls nicht näher dargestellten) Schlitten oder Stellzylinder befestigt.

Die Vorratsrollen für das Abklebewerkzeug sind so dimensioniert bzw. ausgeführt, daß während der Schicht so wenig wie möglich neue Rollen ausgewechselt werden müssen. Wird dennoch ein Wechsel erforderlich, so kann beispielsweise der Roboter in eine Rollenwechselposition fahren, in der eine neue Rolle von einem Mitarbeiter manuell eingewechselt wird. Alternativ ist auch ein automatischer Rollenwechsel denkbar, bei dem eine vorgerüstete Rolle automatisch in das Abklebewerkzeug eingewechselt wird oder bei dem das bisherige Abklebewerkzeug gegen ein anderes vorbestücktes Abklebewerkzeug automatisch ausgetauscht wird.

Das Abklebewerkzeug kann insgesamt modular aufgebaut sein, so daß an einem Klebewerkzeug ein oder mehrere Folienrollen und/oder Rollen mit Sicherungsklebeband angeordnet sind. In der kleinsten Moduleinheit befindet sich nur eine Rolle für Folienstreifen oder Sicherungsklebeband, und das Abklebewerkzeug umfaßt je nach Bedarf zwei oder mehr Module, die nebeneinander am Roboter befestigt werden. Ein weiteres Modul ist das Schneidwerkzeug.

Anhand der Figuren 15 bis 18 wird nachfolgend das bereits erwähnte Fördersystem F beschrieben.

Wie bereits erwähnt, wird das zu beklebende fertige Fahrzeug (in den dargestellten Ausführungsbeispielen der PKW P) nach dem Prinzip einer Waschstraße durch die Applikationslinie geführt. Dabei befindet sich das fertig montierte Fahrzeug auf eigenen Rädern 20 und wird beim Einbringen in die Einfahrstation I dort in Fahrzeugquerrichtung beispielsweise über Einweiser und in Fahrzeuglängsrichtung beispielsweise durch einen hochschwenkbaren Einfahrstopper grob ausgerichtet. Daraufhin werden die fahrzeugspezifischen Daten ermittelt, was beispielsweise über Barcodeleser oder manuelle Eingabe anhand einer Fahrzeugbegleitkarte erfolgt.

Anschließend wird das Fahrzeug von einem das Hinterrad greifenden Mitnehmer 120 gegriffen und weitergefördert. Dies erfolgt beispielsweise wie in der Figur 5 dargestellt mittels eines an einem über Rollen 122 angetriebenen Endlosband angeordneten Mitnehmer 120.

Als erste Station nach der Einfahrstation befindet sich der PKW P in der Folienbereitstellungsstation II, in der dann bereits die für dieses Fahrzeug erforderliche Perforation erfolgen kann. Eine Feinpositionierung des Fahrzeugs ist zu diesem Zeitpunkt noch nicht notwendig.

Mit dem nächsten Fördertakt wird der PKW P über den Mitnehmer 120 in die Station III zur Folienapplikation weitergefördert. Vor der Folienapplikation muß der PKW P möglichst exakt fein positioniert werden. Die Positionierung in X-Richtung erfolgt dabei beispielsweise mittels längsverfahrbar angeordneten Ausrichtern 124, die vorteilhafterweise keilförmig ausgebildet sind und das Fahrzeug über die Positionierung des Hinterrades feinpositionieren.

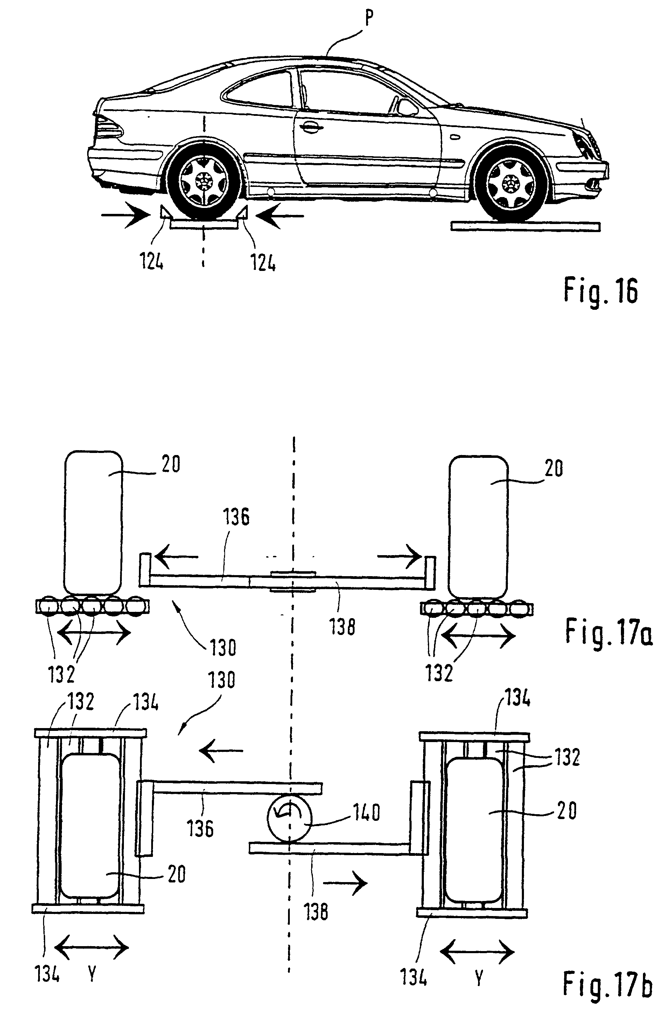

Die Feinpositionierung in Y-Richtung erfolgt vorteilhafterweise mittels längs angeordneten Rollen. Dieses Prinzip ist stark schematisch in Figur 17 veranschaulicht, wobei Figur 17a zwei Räder 20 eines zu positionierenden Fahrzeugs auf der Positionierungsvorrichtung in Vorderansicht und Figur 17b die Räder 20 der Figur 17a in Draufsicht zeigen.

Die Positionierungsvorrichtung 130 umfaßt eine Mehrzahl von Rollen 132, die mit ihren Längsachsen parallel zur Fahrzeugförderrichtung angeordnet sind und auf welchen die Räder 20 aufliegen. Die Rollen 132 sind in einer horizontalen Ebene parallel zueinander angeordnet und zwischen jeweils stirnseitig angeordneten Halteschienen 134 drehbar gelagert.

Des weiteren umfaßt die Positionierungsvorrichtung 130 Ausrichter 136, 138, die im dargestellten Ausführungsbeispiel stangenförmig ausgebildet sind und mittels einer Antriebseinrichtung 140 (beispielsweise Zahnrad- oder Schneckentrieb) quer zur Förderrichtung im Sinne der eingezeichneten Pfeile verstellbar sind. Zur Feinpositionierung des PKWs P werden die Ausrichter 136, 138 in eine die Räder 20 beaufschlagende Stellung verfahren und können durch Beaufschlagung der Räder 20 diese auf den Rollen 134 in Y-Richtung verstellen, bis die geforderte Positionierung erreicht ist. Durch das gleichförmige Ausfahren der beiden Ausrichter wird das Fahrzeug unabhängig von Spurbreite und Radgröße immer mittig ausgerichtet.

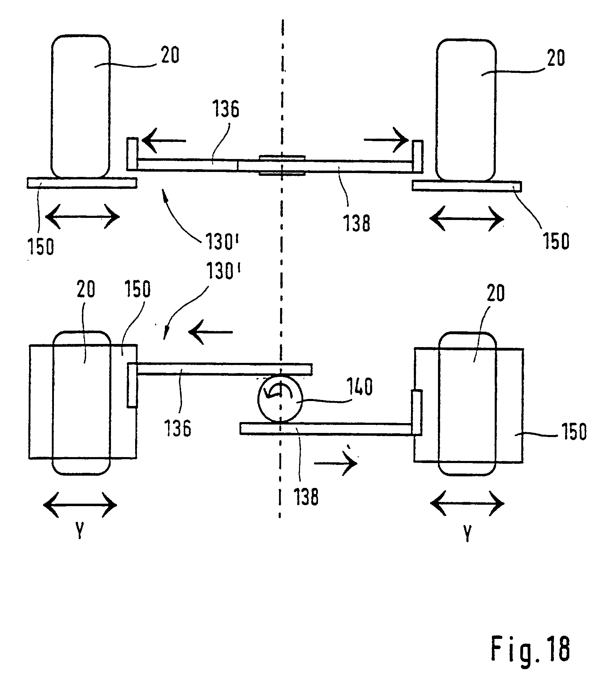

Die Fahrzeugpositionierung in Y-Richtung kann dem geschilderten Prinzip folgend auch mit Schwimmschlitten 150 realisiert werden, auf welchen die Räder 20 des PKWs P aufliegen (vgl. Figur 18).

In einer weiteren Ausführung kann die Förderung der auf einem Schlitten stehenden Karosserie mit konventioneller Fördertechnik erfolgen. In der Applikationsstation III wird der Schlitten dann mit Skidspannern und Führungsrollen feinpositioniert (nicht gezeichnet).

Die Fahrzeugtypenanpassung in der Positionierung erfolgt durch unterschiedliche Roboterprogramme.

## Patentansprüche

1. Verfahren zum Applizieren von selbsthaftender Schutzfolie auf Oberflächenpartien von Fahrzeug-Karosserien mit folgenden Schritten:
- Bereitstellen eines von einer Vorratsrolle (V1, V2, V3) abgezogenen Folienstückes (SF) in einer Bereitstellungsstation (II) in einem faltenfrei ausgespannten Bereitstellungszustand mittels mindestens eines Halteelements (S0, S1),
- Übernahme des Folienstücks (SF) aus dem Bereitstellungszustand in eine Applikationsstation (III), indem das Folienstück (SF) mittels eines von einem ersten Applikationsroboter (IR2) geführten ersten Halteelements (S2) gehalten und in gewünschter Länge abgezogen wird, dann am anderen Ende der gewünschten Länge mittels eines von dem ersten Applikationsroboter (IR2) oder einem zweiten Applikationsroboter (IR3) unabhängig von dem ersten Halteelement (S2) geführten zweiten Halteelements (S3) gehalten, abgeschnitten und an gegenüberliegenden Kanten gehalten unter Beibehaltung der faltenfreien Ausspannung in die Applikationsstation (III) übernommen wird, wobei das durch Abziehen des Folienstücks (SF) nachgezogene nächste Folienstück (SF') durch das mindestens eine Halteelement (S0, S1) der Bereitstellungsstation (II) im Bereitstellungszustand ausgespannt gehalten wird, und
- Applikation des in die Applikationsstation (III) übernommenen Folienstückes (SF), indem dieses von dem mindestens einen Applikationsroboter (IR2, IR3) lagegerecht auf die zugehörige Oberflächenpartie (60) der Karosserie abgesenkt und faltenund blasenfrei auf diese angedrückt wird.

2. Verfahren nach Anspruch 1, **dadurch gekennzeichnet, daß** vor der Übernahme des Folienstückes (SF) durch den mindestens einen Applikationsroboter (IR2, IR3) mittels einer programmiert verfahrbaren, ein Perforationswerkzeug (22) tragenden Einrichtung lagegerecht Perforationslinien in der Schutzfolie angebracht werden.

3. Verfahren nach Anspruch 1 oder 2, **dadurch gekennzeichnet, daß** das Folienstück (SF) in der Bereitstellungsstation (II) an einem freien Ende von einem ersten Halteelement (S1) und vorratsrollenseitig von einem zweiten Halteelement (S0) gehalten wird, und daß zur Übernahme des Folienstückes (SF) in die Applikationsstation (III) ein erstes robotergeführtes Halteelement (S2) das freie Ende des Folienstückes von dem ersten Halteelement (S1) übernimmt und in gewünschter Länge von der Vorratsrolle (V1) abzieht, worauf das nun im Bereich des ersten Halteelements (S1) liegende vorratsrollenseitige Ende des Folienstücks (SF) von einem zweiten robotergeführten Halteelement (S3) gehalten und zwischen dem ersten Halteelement (S1) der Bereitstellungsstation (II) und dem zweiten robotergeführten Halteelement (S3) abgeschnitten wird.

4. Verfahren nach Anspruch 3, **dadurch gekennzeichnet, daß** die robotergeführten Halteelemente (S2, S3) von einem oder zwei Applikationsrobotern (IR2, IR3) geführt werden.

5. Verfahren nach einem der vorhergehenden Ansprüche, **dadurch gekennzeichnet, daß** mindestens zwei übereinander und/oder nebeneinander angeordnete Vorratsrollen (V1, V2, V3) in der Bereitstellungsstation (II) vorgesehen sind, denen jeweils Halteelemente (S0a, S0b, S0c; S1a, S1b, S1c) zum Bereitstellen abgezogener Folienstücke (SFa, SFb, SFc) im Bereitstellungszustand zugeordnet sind.

6. Verfahren nach einem der vorhergehenden Ansprüche, **dadurch gekennzeichnet, daß** nach dem Applizieren großflächiger Folienstücke verbleibende Karosserieabschnitte mittels eines robotergeführten Abklebewerkzeugs (80) mit Folienstreifen beklebt werden.

7. Verfahren nach Anspruch 6, **dadurch gekennzeichnet, daß** nach dem Applizieren von großflächigen Folienstücken und Folienstreifen Windangriffskanten der aufgebrachten Schutzfolie mittels eines robotergeführten Abklebewerkzeugs (80) mit Sicherungsklebeband abgeklebt werden.

8. Verfahren nach Anspruch 7, **dadurch gekennzeichnet, daß** das Bekleben mit Folienstreifen und mit Sicherungsklebeband mittels desselben Abklebewerkzeugs (80) erfolgt.

9. Verfahren nach Anspruch 7 oder 8, **dadurch gekennzeichnet, daß** ein Freischneiden überklebter Fugen und Sicken mittels eines zusätzlich an dem Abklebewerkzeug (80) angebrachten Schneidwerkzeugs erfolgt.

10. Verfahren nach einem der vorhergehenden Ansprüche, **dadurch gekennzeichnet, daß** die Halteelemente (S0, S1, S2, S3) Saugleisten sind.

11. Verfahren nach einem der vorhergehenden Ansprüche, **dadurch gekennzeichnet, daß** den Halteelementen (S0, S1) Greifelemente (G0, G1) zugeordnet sind.

12. Verfahren nach einem der vorhergehenden Ansprüche, **dadurch gekennzeichnet, daß** ein Rakeln der Folie mittels einer zusätzlich an den robotergeführten Halteelementen (S2, S3) angebrachten Rakel erfolgt.

13. Vorrichtung zum automatisierten, serienmäßigen Applizieren von selbsthaftender Schutzfolie (SF) auf Oberflächenpartien (60) von Fahrzeug-Karosserien, insbesondere zur Durchführung des Verfahrens nach einem der Ansprüche 1 bis 12, mit einer Bereitstellungsstation (II) und einer Applikationsstation (III), wobei die Bereitstellungsstation (II) mindestens ein Halteelement (S0, S1) zum Bereitstellen eines von mindestens einer Vorratsrolle (V1, V2, V3) abgezogenen Folienstücks (SF) in faltenfreier Ausspannung umfaßt, und wobei die Applikationsstation (III) mindestens einen Applikationsroboter (IR2, IR3) umfaßt, der dazu geeignet ist, das in der Bereitstellungsstation (II) bereitgestellte Folienstück (SF) durch Abziehen von der Vorratsrolle (V1) und Abtrennen von dem nachgezogenen und durch das mindestens eine Halteelement (S0, S1) der Bereitstellungsstation (II) in Bereitstellung übernommenen Folienstücks (SF') mittels zweier an gegenüberliegenden Kanten des Folienstückes (SF) angreifenden und unabhängig voneinander geführter Halteelemente (S2, S3) in faltenfreier Ausspannung zu übernehmen und auf die Karosserie eines in der Applikationsstation (III) bereitstehenden Kraftfahrzeuge falten- und blasenfrei aufzubringen.

14. Vorrichtung nach Anspruch 13, **dadurch gekennzeichnet, daß** das Abtrennen des abgezogenen Folienstücks (SF) von dem nachgezogenen Folienstück (SF') mittels einer Abschneideeinheit (36) der Bereitstellungsstation (II) erfolgt.

15. Vorrichtung nach Anspruch 13 oder 14, **dadurch gekennzeichnet, daß** der Vorratsrolle (V1) eine Tänzerwalze (32) zum definierten Abziehen von Schutzfolie zugeordnet ist.

16. Vorrichtung nach einem der Ansprüche 13 bis 15, **dadurch gekennzeichnet, daß** die Bereitstellungsstation (II) ein von einem Industrieroboter (IR1) geführtes Perforationswerkzeug (22) zum Anbringen vorbestimmter Perforationslinien in dem bereitgestellten Folienstück (SF) umfaßt.

17. Vorrichtung nach einem der Ansprüche 13 bis 16, **gekennzeichnet durch** mindestens zwei im wesentlichen übereinander angeordnete Vorratsrollen (V1, V2, V3).

18. Vorrichtung nach einem der Ansprüche 13 bis 17, **dadurch gekennzeichnet, daß** die Bereitstellungsstation (II) jeder Vorratsrolle (V1, V2, V3) zugeordnet zwei Halteelemente (S0, S1) zum Halten und Bereitstellen des Folienstückes (SF) in ausgespanntem Zustand umfaßt.

19. Vorrichtung nach einem der Ansprüche 13 bis 18, **dadurch gekennzeichnet, daß** dem mindestens einen Halteelement (S0, S1) der Bereitstellungsstation (II) Greifelemente (G0, G1) zugeordnet sind.

20. Vorrichtung nach einem der Ansprüche 13 bis 19, **dadurch gekennzeichnet, daß** die Applikationsstation (III) zwei Industrieroboter (IR2, IR3) umfaßt, die jeweils ein Halteelement (S2, S3) zum Halten des aus der Bereitstellungsstation (II) übernommenen Folienstücks (SF) und zum Applizieren auf die Karosserie eines Kraftfahrzeugs (P) führen.

21. Vorrichtung nach Anspruch 20, **dadurch gekennzeichnet, daß** jedem Halteelement (S2, S3) der Applikationsstation (III) eine Rakel (R2, R3) zum Glattstreichen von auf die Karosserieoberfläche applizierter Folie zugeordnet ist.

22. Vorrichtung nach Anspruch 21, **dadurch gekennzeichnet, daß** die Rakel (R2, R3) ausfahrbar ist und bereits während des Applizierens die Schutzfolie glattstreicht.

23. Vorrichtung nach einem der Ansprüche 13 bis 22, **dadurch gekennzeichnet, daß** die Halteelemente (S0, S1, S2, S3) Saugleisten sind.

24. Vorrichtung nach Anspruch 23, **dadurch gekennzeichnet, daß** die Saugleisten (S0, S1, S2, S3) aus mehreren nebeneinander angeordneten Saugkammern (50) bestehen, die an einem Träger (52) befestigt sind und daß jeder Saugkammer jeweils ein Vakuumanschluß (54) zugeordnet ist.

25. Vorrichtung nach einem der Ansprüche 13 bis 24, **dadurch gekennzeichnet, daß** die Applikationsstation (III) mindestens einen weiteren Industrieroboter (IR4, IR5) aufweist, der ein Abklebewerkzeug (80) zum Abkleben von durch die großflächigen Folienstücke nicht abgedeckten Eck- und Randbereichen der Karosserie des Kraftfahrzeugs (P) mittels Folienstreifen aufweist.

26. Vorrichtung nach Anspruch 25, **dadurch gekennzeichnet, daß** das Abklebewerkzeug (80) zusätzlich zum Abkleben von Windangriffskanten applizierter Schutzfolie und/oder Folienstreifen mittels Sicherungsklebeband dient.

27. Vorrichtung nach Anspruch 25 oder 26, **dadurch gekennzeichnet, daß** jedem Abklebewerkzeug (80) ein Schneidwerkzeug (110) zum Schneiden von überklebten Fugen und Sicken zugeordnet ist.

28. Vorrichtung nach einem der Ansprüche 13 bis 27, **dadurch gekennzeichnet, daß** ein Fördersystem (F) zur automatisierten Förderung des Kraftfahrzeuges (P) entlang einer Applikationslinie durch die Bereitstellungsstation (II) und die Applikationsstation (III) vorgesehen ist.

29. Vorrichtung nach Anspruch 28, **dadurch gekennzeichnet, daß** das Fördersystem (F) eine Positionierungsvorrichtung (130, 130') zur Feinpositionierung des Kraftfahrzeuges (P) senkrecht zur Förderrichtung umfaßt.

30. Vorrichtung nach Anspruch 29, **dadurch gekennzeichnet, daß** die Positionierungsvorrichtung (130) eine Mehrzahl von Rollen (132) umfaßt, die mit ihren Längsachsen parallel zur Fahrzeugförderrichtung angeordnet sind und auf welchen die Räder (20) aufliegen, sowie Ausrichter (136, 138) umfaßt, die in eine die Räder (20) des Kraftfahrzeuges (P) beaufschlagende Stellung verfahrbar sind.

31. Vorrichtung nach Anspruch 29, **dadurch gekennzeichnet, daß** die Positionierungseinrichtung (130') Schwimmschlitten (150) umfaßt, auf welchen die Räder (20) des Kraftfahrzeugs (P) aufliegen.

## Claims

1. Method of applying self-adhesive protective film to surface sections of vehicle bodywork with the following steps:
- Provision of a supply roll (V1, V2, V3) of removed film piece (SF) in a supply station (II) in a fold-free extended supply condition by means of at least one holding element (S0, S1),
- Removal of the piece of film (SF) from the supply condition into an application station (III) wherein the piece of film (SF) is held by means of a first holding element (S2) guided by a first application robot (IR2) and is removed in the desired length, then at the other end of the desired length held by a second holding element (S3) guided by the first application robot (IR2) or a second application robot (IR3) independently of the first holding element, cut of and held on opposite-lying edges with the retention of the fold-free extension taken into the application station (III) wherein the next piece of film (SF') pulled through removal of the piece of film (SF) is held extended in the supply condition by the at least one holding element (S0, S1) of the supply station (II), and
- Application of the piece of film (SF) taken into the application station (III) in that it is lowered by the at least one application robot (IR2, IR3) in correct position onto the associated surface section (60) of the bodywork and pressed onto this in a fold-free and bubble-free way.

2. Method according to claim 1 **characterised in that** before the piece of film (SF) is taken by the at least one application robot (IR2, IR3) perforation lines are made in the correct position in the protective film by means of a programmable device carrying a perforation tool (22).

3. Method according to claim 1 or 2 **characterised in that** the piece of film (SF) is held in the supply station (II) at one free end by a first holding element (S1) and on the side of the supply roll by a second holding element (S0) and that for the purpose of taking the piece of film (SF) into the application station (III) a first robot-controlled holding element (S2) takes the free end of the piece of film from the first holding element (S1) and removes it at the desired length from the supply roll (V1) whereupon the end of the piece of film (SF) on the supply roll side now lying in the area of the first holding element (S1) is held by a second robot-controlled holding element (S3) and cut off between the first holding element (S1) of the supply station (II) and the second robot-controlled holding element (S3).

4. Method according to claim 3 **characterised in that** the robot-controlled holding elements (S2, S3) are controlled by one or two application robots (IR2, IR3).

5. Method according to one of the preceding claims **characterised in that** at least two supply rolls (V1, V2, V3) arranged over each other and/or beside each other are provided in the supply station (II), to which holding elements (S0a, S0b, S0c; S1a, S1b, S1c) are respectively assigned for the purpose of providing pulled away pieces of film (SFa, SFb, SFc) in the supply condition.

6. Method according to one of the preceding claims **characterised in that** after the application of pieces of film covering large areas strips of film are stuck onto remaining bodywork sections by means of a robot-controlled sticking tool (80).

7. Method according to claim 6 **characterised in that** after the application of pieces of film covering large areas and strips of film wind strain edges of the applied protective film are stuck with a securing adhesive band by means of a robot-controlled sticking tool (80).

8. Method according to claim 7 **characterised in that** the strips of film and securing adhesive band are stuck on by means of the same sticking tool (80).

9. Method according to claim 7 or 8 **characterised in that** free cutting of over-stuck joins and creases takes place by means of a cutting tool applied additionally to the sticking tool (80).

10. Method according to one of the preceding claims **characterised in that** the holding elements (S0, S1, S2, S3) are suction strips.

11. Method according to one of the preceding claims **characterised in that** grip elements (G0, G1) are assigned to the holding elements (S0, S1).

12. Method according to one of the preceding claims **characterised in that** smoothing out of the film takes place by means of a doctor blade additionally applied to the robot-controlled holding elements (S2, S3).

13. Device for the automated, serial application of self-adhesive protective film (SF) on surface sections (60) of vehicle bodywork, in particular for the purpose of carrying out the method according to one of the claims 1 to 12, with a supply station (II) and an application station (III), wherein the supply station (II) has at least one holding element (S0, S2) for supplying a piece of film (SF) pulled away from at least one supply roll (V1, V2, V3) in a fold-free extended state and wherein the application station (III) has at least one application robot (IR2, IR3) which is suitable for taking in a fold-free extended state the piece of film (SF) supplied in the supply station (II) through pulling away from the supply roll (V1) and separation from the subsequently pulled piece of film (SF') taken into supply through the at least one holding element (S0, S1) of the supply station (II) by means of two holding elements (S2, S3) gripping on opposite-lying edges of the piece of film (SF) and guided independently from each other and applying it to the bodywork of a vehicle standing in the operation station (III) in a fold-free and bubble-free way.

14. Device according to claim 13 **characterised in that** the separation of the pulled away piece of film (SF) from the subsequently pulled piece of film (SF') takes place by means of a cutting unit (36) of the supply station (II).

15. Device according to claim 13 or 14 **characterised in that** a spinning drum (32) for the defined removal of protective film is assigned to the supply roll (VI).

16. Device according to one of the claims 13 to 15 **characterised in that** the supply station (II) has a perforation tool (22) controlled by an industrial robot (IR1) for the application of pre-determined perforation lines in the supplied piece of film (SF).

17. Device according to one of the claims 13 to 16 **characterised by** at least two supply rolls (V1, V2, V3) arranged essentially over each other.

18. Device according to one of the claims 13 to 17 **characterised in that** the supply station (II) assigned to each supply roll (V1, V2, V3) has two holding elements (S0, S1) for holding and supplying the piece of film (SF) in an extended state.

19. Device according to one of the claims 13 to 18 **characterised in that** grip elements (G0, G1) are assigned to the at least one holding element (S0, S1) of the supply station (II).

20. Device according to one of the claims 13 to 19 **characterised in that** the application station (III) has two industrial robots (IR2, IR3) which each control a holding element (S2, S3) for holding the piece of film (SF) taken out of the supply station (II) and for application to the bodywork of a vehicle (P).

21. Device according to claim 20 **characterised in that** a doctor blade (R2, R3) is assigned to each holding element (S2, S3) of the application station (III) for the purpose of smoothing out film applied to the vehicle surface.

22. Device according to claim 21 **characterised in that** the doctor blade (R2, R3) is extendable and already smooths out the protective film during application.

23. Device according to one of the claims 13 to 22 **characterised in that** the holding elements (S0, S1, S2, S3) are suction strips.

24. Device according to claim 23 **characterised in that** the suction strips (S0, S1, S2, S3) consist of several suction chambers (50) arranged beside each other which are fixed to a support (52) and that a vacuum connection (54) is assigned to each suction chamber.

25. Device according to one of the claims 13 to 24 **characterised in that** the application station (III) has at least one further industrial robot (IR4, IR5) which has a sticking tool (80) for sticking strips of film on the corner and edge areas of the bodywork of the vehicle (P) not covered by the pieces of film covering large areas.

26. Device according to claim 25 **characterised in that** the sticking tool (80) serves additionally for sticking wind strain edges of applied protective film and/or strips of film by means of a securing adhesive band.

27. Device according to claim 25 or 26 **characterised in that** a cutting tool (110) is assigned to each sticking tool (80) for the purpose of cutting over-stuck joins and creases.

28. Device according to one of the claims 13 to 27 **characterised in that** a conveying system (F) is provided for the automated conveying of the vehicle (P) along an application line through the supply station (II) and the application station (III).

29. Device according to claim 28 **characterised in that** the conveying system (F) has a positioning device (130, 130') for the fine positioning of the motor vehicle (P) perpendicularly to the direction of conveyance.

30. Device according to claim 29 **characterised in that** the positioning device (130) has a multitude of rolls (132) which are arranged with their longitudinal axes parallel to the direction of conveyance of the vehicle and on which the wheels (20) lie, as well as alignment members (136, 138) which can be moved into a position contacting the wheels (20) of the motor vehicle (P).

31. Device according to claim 29 **characterised in that** the positioning device (130') has flotation carriages (150), on which the wheels (20) of the vehicle (P) lie.

## Revendications

1. Procédé pour appliquer un film protecteur auto-adhésif sur des parties de surfaces de carrosseries de véhicules, présentant les étapes suivantes :
- préparation d'une pièce de film (SF) dévidée d'un rouleau de réserve (V1, V2, V3), dans un poste de préparation (II), en la maintenant dans un état d'attente étendu, sans plis, au moyen d'au moins un élément de maintien (S0, S1),
- transfert et réception de la pièce de film (SF) à l'état d'attente dans un poste d'application (III), de la manière suivante, à savoir que la pièce de film (SF), au moyen d'un premier élément de maintien (S2) mené et guidé par un premier robot d'application' (IR2), est maintenue et est dévidée de la longueur souhaitée, puis, à l'autre extrémité de la longueur voulue, au moyen d'un second élément de maintien (S3) mené et guidé indépendamment du premier élément de maintien (S2) par le premier robot d'application (IR2) ou un second robot d'application (IR3), est maintenue, coupée et réceptionnée dans le poste d'application (III) en étant maintenue sur des bords opposés tout en conservant son état étendu sans plis, et la pièce de film suivante (SF') déroulée en conséquence par le dévidage de la pièce de film (SF) étant maintenue étendue dans l'état d'attente, par ledit au moins un élément de maintien (S0, S1 dans le poste de préparation (II),
- application de la pièce de film (SF) réceptionnée dans le poste d'application (III), par le fait que celle-ci est abaissée en position correcte par ledit au moins un robot d'application (IR2, IR3), sur la partie de surface (60) de la carrosserie, et est appuyée sans plis et sans cloques sur cette partie de surface de la carrosserie.

2. Procédé selon la revendication 1, **caractérisé en ce qu'**avant la réception de la pièce de film (SF) par ledit au moins un robot d'application (IR2, IR3), on réalise dans le film protecteur, des lignes de perforation en position correcte, au moyen d'un dispositif portant un outil de perforation (22) et pouvant être déplacé de manière programmée.

3. Procédé selon la revendication 1 ou 2, **caractérisé en ce que** la pièce de film (SF), dans le poste de préparation (II), est maintenue à une première extrémité libre, par un premier élément de maintien (S1), et du côté du rouleau de réserve, par un second élément de maintien (S0), et **en ce que** pour le transfert et la réception dans le poste d'application (III), un premier élément de maintien mené et guidé par robot (S2) prend en charge l'extrémité libre de la pièce de film à partir du premier élément de maintien (S1) et dévide le film selon la longueur souhaitée du rouleau de réserve (V1), à la suite de quoi l'extrémité côté rouleau de réserve de la pièce de film (SF), qui se trouve à présent dans la zone du premier élément de maintien (S1), est maintenue par un second élément de maintien mené et guidé par robot (S3), et est coupée entre le premier élément de maintien (Si) du poste de préparation (II) et le second élément de maintien mené et guidé par robot (S3).

4. Procédé selon la revendication 3, **caractérisé en ce que** les éléments de maintien menés et guidés par robot (S2, S3) sont menés et guidés par un ou deux robots d'application (IR2, IR3).

5. Procédé selon l'une des revendications précédentes, **caractérisé en ce que** dans le poste de préparation (II) sont prévus au moins deux rouleaux de réserve (V1, V2, V3) disposés de manière superposée et/ou côte à côte, à chacun desquels sont associés respectivement des éléments de maintien (S0a, S0b, S0c ; S1a, S1b, Sic) pour préparer des pièces de film dévidées (SFa, SFb, SFc) dans un état d'attente.

6. Procédé selon l'une des revendications précédentes, **caractérisé en ce qu'**après l'application de pièces de film de grande surface, des parties de carrosserie résiduelles non encore protégées, sont revêtues de bandes adhésives de film au moyen d'un outil de collage (80) mené et guidé par robot.

7. Procédé selon la revendication 6, **caractérisé en ce qu'**après l'application de pièces de film de grande surface et de bandes de film, des bords de prise au vent du film protecteur ayant été appliqué sont revêtus par collage d'un ruban adhésif de sécurité, au moyen d'un outil de collage (80) mené et guidé par robot.

8. Procédé selon la revendication 7, **caractérisé en ce que** le collage des bandes de film et du ruban adhésif de sécurité est effectué au moyen du même outil de collage (80).

9. Procédé selon la revendication 7 ou 8, **caractérisé en ce que** l'on effectue une coupe de dégagement des joints et moulures revêtus par collage, au moyen d'un outil de coupe rapporté en supplément sur l'outil de collage (80).

10. Procédé selon l'une des revendications précédentes, **caractérisé en ce que** les éléments de maintien (S0, S1, S2, S3) sont des barres à aspiration.

11. Procédé selon l'une des revendications précédentes, **caractérisé en ce qu'**aux éléments de maintien (S0, Si) sont associés des éléments de préhension (G0, G1).

12. procédé selon l'une des revendications précédentes, **caractérisé en ce que** l'on effectue un raclage du film au moyen d'une racle rapportée en supplément sur les éléments de maintien menés et guidés par robot (S2, S3).

13. Dispositif pour appliquer en série, de manière automatisée, un film protecteur auto-adhésif (SF) sur des parties de surface (60) de carrosseries de véhicules, notamment pour la mise en oeuvre du procédé selon l'une des revendications 1 à 12, comprenant un poste de préparation (II) et un poste d'application (III), le poste de préparation (II) englobant au moins un élément de maintien (S0, Si) pour préparer une pièce de film (SF) dévidée d'au moins un rouleau de réserve (V1, V2, V3), sous une forme étendue sans plis, et le poste d'application (III) englobant au moins un robot d'application (IR2, IR3) qui, en dévidant la pièce de film (SF) du rouleau de réserve (V1) et en la sectionnant de la pièce de film suivante (SF') déroulée en conséquence et réceptionnée en position d'attente par ledit au moins un élément de maintien (S0, S1) du poste de préparation (II), est adapté à réceptionner sous une forme tendue sans plis, la pièce de film (SF) en attente dans le poste de préparation (II), au moyen de deux éléments de maintien (S2, S3) menés et guidés de manière indépendante l'un de l'autre et agissant sur deux bords opposés de la pièce de film (SF), et à appliquer cette dernière, sans plis ni cloques, sur la carrosserie d'un véhicule automobile en attente dans le poste d'application (III).

14. Dispositif selon la revendication 13, **caractérisé en ce que** le sectionnement entre la pièce de film (SF) dévidée et la pièce de film suivante dévidée en conséquence, est effectué au moyen d'une unité de coupe (36) du poste de préparation (II).

15. Dispositif selon la revendication 13 ou 14, **caractérisé en ce qu'**au rouleau de réserve (V1) est associé un cylindre de compensation (32) pour le dévidage défini de film protecteur.

16. Dispositif selon l'une des revendications 13 à 15, **caractérisé en ce que** le poste de préparation (II) comprend un outil de perforation. (22) mené et guidé par un robot industriel (IR1) et destiné à réaliser des lignes de perforations prédéterminées dans la pièce de film (SF) en attente.

17. Dispositif salon l'une des revendications 13 à 16, **caractérisé par** au moins deux rouleaux de réserve (V1, V2, V3) disposés sensiblement de façon superposée.

18. Dispositif selon l'une des revendications 13 à 17, **caractérisé en ce que** le poste de préparation (II) comprend, associés à chaque rouleau de réserve (V1, V2, V3), deux éléments de maintien (S0, S1) destinés à maintenir et préparer la pièce de film (SF) dans l'état étendu.

19. Dispositif selon l'une des revendications 13 à 18, **caractérisé en ce qu'**audit au moins un élément de maintien (S0, S1) du poste de préparation (II) sont associés des éléments de préhension (G0, G1).

20. Dispositif selon l'une des revendications 13 à 19, **caractérisé en ce que** le poste d'application (III) comprend deux robots industriels (IR2, IR3), qui mènent et guident chacun un élément de maintien (S2, S3) destiné à maintenir la pièce de film (SF) réceptionnée du poste de préparation (II) et à l'appliquer sur la carrosserie d'un véhicule automobile (P).

21. Dispositif selon la revendication 20, **caractérisé en ce qu'**à chaque élément de maintien (S2, S3) du poste d'application (TTT) est associée une racle (R2, R3) pour lisser le film appliqué sur la surface de la carrosserie.

22. Dispositif selon la revendication 21, **caractérisé en ce que** la racle (R2, R3) est extractible et lisse le film protecteur déjà pendant l'application.

23. Dispositif selon l'une des revendications 13 à 22, **caractérisé en ce que** les éléments de maintien (S0, S1, S2, S3) sont des barres à aspiration.

24. Dispositif selon la revendication 23, **caractérisé en ce que** les barres d'aspiration (S0, S1, S2, S3) sont formées par plusieurs chambres d'aspiration (50) disposées côte à côte et fixées à un support (52), et **en ce qu'**à chaque chambre d'aspiration est associé respectivement un raccord de branchement de vide (54).

25. Dispositif selon l'une des revendications 13 à 24, **caractérisé en ce que** le poste d'application (III) comporte au moins un autre robot industriel (IR4, IR5) qui comprend un outil de collage (80) destiné à couvrir par collage à l'aide de bandes de film, des zones de coin et de bordure de la carrosserie du véhicule automobile (P), n'ayant pas été recouvertes par les pièces de film de grande surface.

26. Dispositif selon la revendication 25, **caractérisé en ce que** l'outil de collage (80) sert en outre à couvrir par collage à l'aide de ruban adhésif de sécurité, des bords de prise au vent du film protecteur et/ou des bandes de film ayant déjà été appliqués.

27. Dispositif selon la revendication 25 ou 26, **caractérisé en ce qu'**à chaque outil de collage (80) est associé un outil de coupe (110) pour dégager par coupe les joints et moulures ayant été recouverts par collage.

28. Dispositif selon l'une des revendications 13 à 27, **caractérisé en ce qu'**il est prévu un système de transport (F) pour le transport automatisé du véhicule automobile (P) le long d'une ligne d'application traversant le poste de préparation (II) et le poste d'application (III).

29. Dispositif selon la revendication 28, **caractérisé en ce que** le système de transport (F) comprend un dispositif de positionnement (130, 130') pour le positionnement de précision du véhicule automobile (P) perpendiculairement à la direction de transport.

30. Dispositif selon la revendication 29, **caractérisé en ce que** le dispositif de positionnement (130) comprend un grand nombre de rouleaux (132) dont les axes longitudinaux sont disposés parallèlement à la direction de transport du véhicule et sur lesquels reposent les roues (20), et comprend également des mécanismes d'orientation (136, 138) qui peuvent être amenés dans une position de sollicitation des roues (20) du véhicule automobile (P).

31. Dispositif selon la revendication 29, **caractérisé en ce que** le dispositif de positionnement (30') comprend des chariots flottants (150) sur lesquels reposent les roues (20) du véhicule automobile (P).
